(19)

Europäisches
Patentamt
European
Patent Office
Office européen
des brevets

(11) **EP 4 546 725 A1**

(12) **EUROPEAN PATENT APPLICATION**
published in accordance with Art. 153(4) EPC

(43) Date of publication:
**30.04.2025 Bulletin 2025/18**

(21) Application number: **23826331.3**

(22) Date of filing: **19.06.2023**

(51) International Patent Classification (IPC):
***H04L 25/03*** *(2006.01)*

(52) Cooperative Patent Classification (CPC):
**H04L 25/03; H04W 72/0446; H04W 72/50**

(86) International application number:
**PCT/CN2023/101017**

(87) International publication number:
**WO 2023/246683 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 CN 202210730477**

(71) Applicant: **Vivo Mobile Communication Co., Ltd.
Dongguan, Guangdong 523863 (CN)**

(72) Inventor: **HUANG, Wei
Dongguan, Guangdong 523863 (CN)**

(74) Representative: **Shieldmark
P.O. Box 90471
2509 LL The Hague (NL)**

(54) **INFORMATION TRANSMISSION AND RECEPTION METHODS AND APPARATUSES, DEVICE,
AND READABLE STORAGE MEDIUM**

(57)   The disclosure discloses a method and apparatus for transmitting information, a method and apparatus for receiving information, a device, and a readable storage medium, and belongs to the technical field of communication. The method for transmitting information according to an embodiment of the disclosure includes: transmitting a first signal by a first device, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2.

Transmit a first signal by a first device     21

**FIG. 2**

**Description**

**CROSS-REFERENCE TO RELATED APPLICATIONS**

The disclosure claims the priority to Chinese Patent Application No. 202210730477.X filed in China on June 24, 2022, which is incorporated herein in its entirety by reference.

**TECHNICAL FIELD**

The disclosure belongs to the technical field of communication, and particularly relates to a method and apparatus for transmitting information, a method and apparatus for receiving information, a device, and a readable storage medium.

**BACKGROUND**

In a bistatic backscatter communication system, a received signal is superposition of a useful backscattered signal and a direct link interference signal of the same frequency, and the strength of the direct link interference signal may be far higher than that of the backscattered signal. Thus, to improve the speed, coverage, reliable transmission and large-scale connection in backscatter communication, strong direct link interference is required to be eliminated technically. By an existing method for eliminating the direct link interference, a repetitive structure of a radio frequency signal is combined with a baseband signal of backscatter communication (Backscatter Communication, BSC) for demodulating a BSC modulated signal under the strong direct link interference. However, the demodulation performance of this method is poor due to its susceptibility to a difference between the repetitive structure and a channel delay, the reception signal-to-noise ratio, noise rise, a decision threshold, etc.

**SUMMARY**

Embodiments of the disclosure provide a method and apparatus for transmitting information, a method and apparatus for receiving information, a device, and a readable storage medium, which can solve the problem of a current poor demodulation performance of a backscatter communication (BSC) modulated signal.

In a first aspect, a method for transmitting information is provided. The method includes:
transmitting a first signal by a first device, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2.

In a second aspect, a method for transmitting information is provided. The method includes:

receiving, by a second device, a first signal that is transmitted by a first device, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2; performing, by the second device, backscatter modulation on the first signal by using a second signal, and generating a third signal; where the second signal includes a first sub-signal and a second sub-signal, and the third signal includes a third portion and a fourth portion; the first sub-signal is configured to modulate the first portion to obtain the third portion, and the second sub-signal is configured to modulate the second portion to obtain the fourth portion; bit information of the second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion; and transmitting the third signal by the second device.

In a third aspect, a method for receiving information is provided. The method includes:

receiving, by a third device, a third signal that is transmitted by a second device; where the third signal includes a third portion and a fourth portion, the third portion occupies M first time units, the fourth portion occupies M second time units, and M is an integer greater than 2; bit information of a second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion;

obtaining, by the third device, a first difference group through subtraction on the data in every two adjacent first time units in the third portion, and obtaining, by the third device, a second difference group through subtraction on the data in every two adjacent second time units in the fourth portion;

determining, by the third device, a first correlation value of a difference of the data in every two adjacent first time units in the third portion according to the first difference group, and determining, by the third device, a second correlation value of a difference of the data in every two adjacent second time units in the fourth portion according to the second difference group; and

obtaining, by the third device, the bit information of the second signal through demodulation according to the first correlation value and the second correlation value.

In a fourth aspect, an apparatus for transmitting information is provided. The apparatus is applied to a first device, and includes:

a first transmission module, configured to transmit a first signal, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2.

In a fifth aspect, an apparatus for transmitting information is provided. The apparatus is applied to a second device, and includes:

a first reception module, configured to receive a first signal that is transmitted by a first device, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2;

a modulation module, configured to perform backscatter modulation on the first signal by using a second signal, and generate a third signal; where the second signal includes a first sub-signal and a second sub-signal, and the third signal includes a third portion and a fourth portion; the first sub-signal is configured to modulate the first portion to obtain the third portion, and the second sub-signal is configured to modulate the second portion to obtain the fourth portion; bit information of the second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion; and

a second transmission module, configured to transmit the third signal.

In a sixth aspect, an apparatus for receiving information is provided. The apparatus is applied to a third device, and includes:

a second reception module, configured to receive a third signal that is transmitted by a second device; where the third signal includes a third portion and a fourth portion, the third portion occupies M first time units, the fourth portion occupies M second time units, and M is an integer greater than 2; bit information of a second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion;

a processing module, configured to obtain a first difference group through subtraction on the data in every two adjacent first time units in the third portion and obtain a second difference group through subtraction on the data in every two adjacent second time units in the fourth portion;

a determination module, configured to determine a first correlation value of a difference of the data in every two adjacent first time units in the third portion according to the first difference group and determine a second correlation value of a difference of the data in every two adjacent second time units in the fourth portion according to the second difference group; and

a demodulation module, configured to obtain the bit information of the second signal through demodulation according to the first correlation value and the second correlation value.

In a seventh aspect, a communication device is provided. The communication device includes: a processor and a memory, where the memory stores a program or an instruction that is runnable on the processor, and the program or the instruction implements steps of the method according to the first aspect, or steps of the method according to the second aspect, or steps of the method according to the third aspect when executed by the processor.

In an eighth aspect, a readable storage medium is provided. The readable storage medium stores a program or an instruction, where the program or the instruction implements steps of the method according to the first aspect, or steps of the method according to the second aspect, or steps of the method according to the third aspect when executed by a processor.

In a ninth aspect, a chip is provided. The chip includes: a processor and a communication interface. The communication interface is coupled to the processor, and the processor is configured to run a program or an instruction to implement steps of the method according to the first aspect, or steps of the method according to the second aspect, or steps of the method according to the third aspect.

In a tenth aspect, a computer program/program product is provided. The computer program/program product is stored in a storage medium, and the computer program/program product is executed by at least one processor to implement steps of the method according to the first aspect, or steps of the method according to the second aspect, or steps of the method according to the third aspect.

In an eleventh aspect, a communication system is provided. The communication system includes at least two of a first device, a second device and a third device. The first device is configured to implement steps of the method according to the first aspect, the second device is configured to implement steps of the method according to the second aspect, and the third device is configured to implement steps of the method according to the third aspect.

In the embodiment of the disclosure, by transmitting the first signal, a repetitive time domain structure of the first signal is utilized, and a baseband signal waveform and a modulation mode of a BSC transmission device are combined in a scenario of backscatter communication. Thus, strong direct link interference can be eliminated, and demodulation complexity of a BSC modulated signal can be further reduced, and a system performance of the backscatter communication is improved.

**BRIEF DESCRIPTION OF THE DRAWINGS**

FIG. 1A is a block diagram of a monostatic backscatter communication system applicable to an embodiment of the disclosure;
FIG. 1B is a block diagram of a bistatic backscatter communication system applicable to an embodiment of the disclosure;
FIG. 2 is a flowchart of a method for transmitting information according to an embodiment of the disclosure;
FIG. 3 is a schematic structural diagram of a first signal in an embodiment of the disclosure;
FIGs. 4A and 4B are schematic diagrams of distribution of first signals according to an embodiment of the disclosure;
FIG. 5 is a flowchart of another method for transmitting information according to an embodiment of the disclosure;
FIGs. 6A to 6D are schematic diagrams of a baseband waveform in Instance 1 of the disclosure;
FIGs. 7A to 7H are schematic diagrams of a baseband waveform in Instance 2 of the disclosure;
FIG. 8 is a flowchart of a method for receiving information according to an embodiment of the disclosure;
FIG. 9 is a schematic structural diagram of an apparatus for transmitting information according to an embodiment of the disclosure;
FIG. 10 is a schematic structural diagram of another apparatus for transmitting information according to an embodiment of the disclosure;
FIG. 11 is a schematic structural diagram of an apparatus for receiving information according to an embodiment of the disclosure; and
FIG. 12 is a schematic structural diagram of a communication device according to an embodiment of the disclosure.

**DETAILED DESCRIPTION**

Technical solutions of embodiments of the disclosure will be clearly described below in conjunction with accompanying drawings of the embodiments of the disclosure. Apparently, the embodiments described are merely some embodiments rather than all embodiments of the disclosure. Based on the embodiments of the disclosure, all other embodiments derived by those of ordinary skill in the art should fall within the protection scope of the disclosure.

Terms such as "first" and "second" in the description and the claims of the disclosure are used to distinguish similar objects rather than describe a specific sequence or a sequential order. It should be understood that terms used in this way can be interchanged under appropriate circumstances, such that the embodiment of the disclosure can be implemented in a sequence other than those illustrated or described herein. In addition, the objects distinguished by "first" or "second" are usually objects of one class with the number of objects unlimited. For example, a first object can indicate one or more first objects. In addition, "and/or" in the description and the claims indicates at least one of connected objects, and the character "/" generally indicates that associated objects in the context are in an "or" relationship.

It is worth pointing out that the technology described in the embodiment of the disclosure is not limited to a long term evolution (Long Term Evolution, LTE)/LTE-advanced (LTE-Advanced, LTE-A) system, and can also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA) and other systems. The terms "system" and "network" in the embodiments of the disclosure are often used interchangeably, and the technology described may be used for the systems and radio technologies mentioned above, and may alternatively be used for other systems and radio technologies, such as the new radio (New Radio, NR) system or the 6th generation (6th Generation, 6G) communication system.

To understand of the embodiments of the disclosure conveniently, the following contents will be described at first.

Backscatter communication (Backscatter Communication, BSC) indicates that a backscatter communication device transmits its own information through signal modulation by using radio frequency signals from other devices or environments, and is a typical passive Internet of Things device. A transmission end of the backscatter communication includes the following basic modules and main functions:

an antenna unit: configured to receive the radio frequency signal and a control command, and also configured to transmit a modulated backscattered signal.

an energy collection module or an energy supply module: this module is used by the backscatter communication device for radio frequency energy collection or other energy collection, including but not limited to solar energy, kinetic energy, mechanical energy and thermal energy. Besides the energy collection module, the transmission end of the backscatter communication may alternatively include a battery energy supply module, and the backscatter communication device is a semi-passive device. The energy collection module or the energy supply module energizes all other modules in the device.

a microcontroller; including control over baseband signal processing, energy storage or a data scheduling status, switch switching, system synchronization, etc.

a signal reception module: configured to demodulate a control command or data transmitted by the backscatter communication reception end or other network nodes.

a channel coding and modulation module: configured to implement channel coding and signal modulation under the control by the controller, and implement modulation by selecting different load impedances under the control by the controller through a selection switch.

a memory or a sensor module: configured to store identity (Identity, ID) information, position information, sensor data, etc. of the device.

Besides the typical constituent modules, a future transmission end of the backscatter communication may further integrate a tunnel diode amplifier module, a low noise amplifier module, etc. for improving reception sensitivity and transmission power of the transmission end.

Optionally, a reception end of the backscatter communication includes the following basic modules and main functions:

an antenna unit: configured to receive the modulated backscattered signal.

a backscattered signal detection module: configured to detect the backscattered signal including but not limited to amplitude shift keying (ASK) detection, phase shift keying (PSK) detection, frequency shift keying (FSK) detection or quadrature amplitude modulation (QAM) detection, transmitted by the transmission end of the backscatter communication.

a demodulation and decoding module: configured to demodulate and decode a detected signal to recover an original information flow.

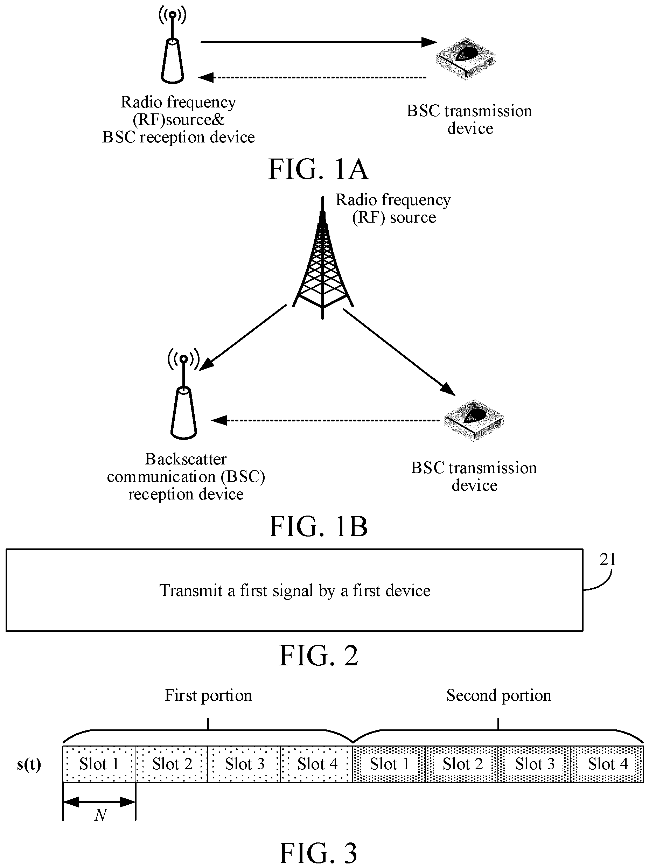

FIG. 1A shows a schematic diagram of a monostatic backscatter communication system (Monostatic Backscatter Communication System, MBCSs) applicable to an embodiment of the disclosure. The MBCS includes a BSC transmission device (such as a tag (Tag)) and a reader (Reader). The reader (Reader) includes a radio frequency (Radio Frequency, RF) source and a BSC reception device. The radio frequency (RF) source is configured to generate a radio frequency (RF) signal to supply energy to the BSC transmission device/Tag. The BSC transmission device backscatters a modulated radio frequency (RF) signal, and the BSC reception device in the Reader demodulates the signal after receiving the backscattered signal. Since the radio frequency (RF) signal transmitted from the BSC transmission device experiences a double near-far effect caused by signal attenuation of a round-trip signal, energy attenuation of the signal is high, and the MBCS is generally used for short-distance backscatter communication, such as an traditional radio frequency identification (Radio Frequency Identification, RFID) application.

FIG. 1B shows a schematic diagram of a bistatic backscatter communication system (Monostatic Backscatter Communication System, MBCSs) applicable to an embodiment of the disclosure. Different from the monostatic backscatter communication system (Monostatic Backscatter Communication System, MBCSs), the radio frequency (RF) source, the BSC transmission device and the BSC reception device in the BBCS are separated, such that high attenuation of the round-trip signal can be avoided. In addition, a performance of the BBCS communication system can be further improved by reasonably placing the radio frequency (RF) source. It is worth noting that an ambient backscatter communication system (Ambient Backscatter Communication Systems, ABCSs) is also a type of bistatic backscatter communication system. But unlike the radio frequency source in the BBCS that is a dedicated signal radio frequency source, a radio frequency source in the ABCS may be a radio frequency source in an available environment, such as a television tower, a cellular base station, a WiFi signal and a Bluetooth signal.

Different from a self-interference signal in the monostatic backscatter communication system, direct link interference from the radio frequency source to the BSC reception end exists in the bistatic backscatter communication system. In addition, since the direct link interference may be a modulated signal, and the BSC reception end generally does not know a modulation feature of a direct link signal, elimination complexity of the direct link interference is higher.

To solve a current poor demodulation performance of the BSC modulated signal, the embodiment of the disclosure eliminates the strong direct link interference/self-interference through a repetitive time domain structure of a carrier signal, and a baseband signal waveform and a modulation mode of the BSC transmission device for the backscatter communication. Specifically, the direct link interference/self-interference is eliminated by using the repetitive time domain structure of the carrier signal on one hand, and bit information is carried by using a polarity change pattern between adjacent time units in a baseband signal on the other hand. Thus, the BSC reception device can demodulate the modulated signal merely by determining a polarity between a modulated reference signal and information signal, and the performance of the BSC demodulated signal under interference is improved.

Optionally, the embodiment of the disclosure may be applied to the monostatic backscatter communication and may alternatively be applied to the bistatic backscatter communication. The following description will be given by mainly taking cross-link interference/direct link interference under the bistatic backscatter communication as an example, but is not limited thereto.

A method and apparatus for transmitting information, a method and apparatus for receiving information, a device, and a readable storage medium according to embodiments of the disclosure will be described in detail below in conjunction with the accompanying drawings, and some embodiments and their application scenarios.

With reference to FIG. 2, FIG. 2 is a flowchart of a method for transmitting information according to an embodiment of the disclosure. The method is applied to a first device. The first device is a radio frequency source, and includes, but is not limited to, a device such as a base station and a television tower that transmits a radio frequency signal/carrier signal. As shown in FIG. 2, the method includes:

Step 21: A first signal is transmitted by the first device.

In this embodiment, the first signal includes a first portion and a second portion. The first portion occupies M first time units, and data in the M first time units are identical. The second portion occupies M second time units, and data in the M second time units are identical. The data in the first time units are identical or contrary to the data in the second time units, and M is an integer greater than 2. For the data in the two time units that are contrary to each other, it can be understood that polarities of the data in the two time units are contrary to each other. For example, a polarity of the data in one time unit is negative and a polarity of the data in the other time unit is positive. Alternatively, a polarity of data in one time unit is positive, and a polarity of data in the other time unit is negative.

Optionally, the first time unit and the second time unit are time units of an identical type, and each may include any one of the following: a symbol (symbol), a slot (slot), a subframe (subframe) and a frame (frame). For example, both the first time unit and the second time unit are slots. Alternatively, both the first time unit and the second time unit are frames. Alternatively, both the first time unit and the second time unit are symbols.

Optionally, a data length corresponding to the first time unit is N, a data length corresponding to the second time unit is N, N is a positive integer greater than a first threshold, and N may be random. The first threshold is a value related to a channel delay, and at least greater than a channel delay value, and may be set based on an actual demand.

In some embodiments, the first signal is a signal for providing a radio frequency carrier and/or radio frequency energy supply, and may be referred to as a carrier signal, a radio frequency signal, a radio frequency carrier signal, etc., which is not limited herein.

In some embodiments, the first portion may be referred to as a reference block, such as a reference slot (Reference slots). The second portion may be referred to as an information block, such as an information slot (Information slots).

In some embodiments, the first signal may be expressed as s(t) and satisfy a time domain structure as follows:

$$s(t) = \begin{cases} s(mN + n) = x(n), & 0 \leq m < M, 0 \leq n < N \\ s(mN + n) = c \cdot x(n), & M \leq m < 2M, 0 \leq n < N \end{cases}$$

In the formula, a value range of m is 0 to 2M, when $0 \leq m < M$, it indicates a corresponding first time unit, and when $M \leq m < 2M$, it indicates a corresponding second time unit. And n has a value range of 0 to N-1, and indicates a data sampling value or a data symbol in the first time unit/second time unit. x(n) indicates an $n^{th}$ data symbol or data sampling value in the first time unit/second time unit. $c \in \{1, -1\}$ indicates a polarity of the second portion relative to the first portion. For example, if $c = 1$, polarities of data in the first time unit and data in the second time unit are identical, while if $c = -1$, polarities of data in the first time unit and data in the second time unit are contrary to each other.

In some embodiments, with both the first time unit and the second time unit being the slots and M being equal to 4 as an example, a structure of the first signal may be shown in FIG. 3. The first portion includes 4 slots and the second portion includes 4 slots, and a data length of each slot is N.

In this way, by transmitting the first signal, a repetitive time domain structure of the first signal is utilized, and a baseband signal waveform and a modulation mode of a BSC transmission device are combined in a scenario of backscatter communication. Thus, strong direct link interference can be eliminated, and demodulation complexity of a BSC modulated signal can be further reduced, and a system performance of the backscatter communication is improved.

Optionally, the data in the first time unit may be a non-random sequence or a random sequence and the data in the second time unit may be a non-random sequence or a random sequence.

For example, the data in the first time unit and the data in the second time unit may be generated by adopting the non-random sequence or the random sequence respectively. For example, the data in the first time unit and the data in the second time unit may be chaotic sequences generated according to a second-order Chebyshev (Chebyshev) polynomial function. The chaotic sequence is the non-random sequence and may be expressed as: $x(n + 1) = 1 - 2x^2(n)$. In the formula, n has a value range of 0 to N-1, and indicates a data position in the first time unit/the second time unit and x(n) indicates an $n^{th}$ data symbol or data sampling value in the first time unit/the second time unit.

In the embodiment of the disclosure, to implement noise smoothing, the first device may transmit P repetitive first signals when transmitting the first signals. Each first signal is a basic signal, the P repetitive first signals are distributed in a centralized manner or a distributed manner, and P is an integer greater than or equal to 2. In the centralized manner, the P repetitive first signals may be understood as distributed together. In the distributed manner, the P repetitive first signals may be understood as distributed at intervals.

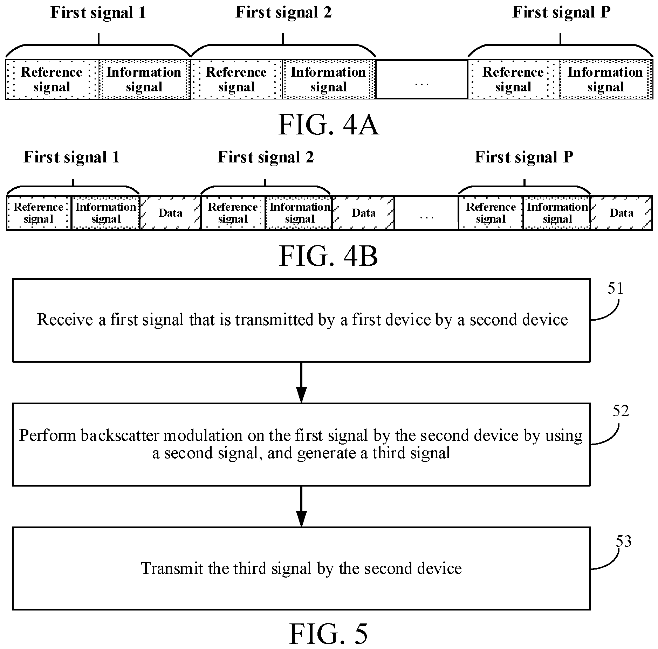

For example, the P repetitive first signals are distributed in a centralized manner, as shown in FIG. 4A. Alternatively, the P repetitive first signals are distributed in a distributed manner, as shown in FIG. 4B.

With reference to FIG. 5, FIG. 5 is a flowchart of a method for transmitting information according to an embodiment of the disclosure. The method is applied to a second device. The second device is a BSC transmission device, and includes, but is not limited to, a tab (Tag) and a passive or semi-passive Internet of Things (Internet of Things, IoT) device. As shown in FIG. 5, the method include:

Step 51: A first signal that is transmitted by a first device is received by the second device.

In this embodiment, the first signal includes a first portion and a second portion. The first portion occupies M first time units, and data in the M first time units are identical. The second portion occupies M second time units, and data in the M second time units are identical. The data in the first time units are identical or contrary to the data in the second time units, and M is an integer greater than 2. For the data in the two time units that are contrary to each other, it can be understood that polarities of the data in the two time units are contrary to each other. For example, a polarity of the data in one time unit is negative and a polarity of the data in the other time unit is positive. Alternatively, a polarity of data in one time unit is positive, and a polarity of data in the other time unit is negative.

Optionally, the first time unit and the second time unit are time units of an identical type, and each may include any one of the following: a symbol (symbol), a slot (slot), a subframe (subframe) and a frame (frame). For example, both the first time unit and the second time unit are slots. Alternatively, both the first time unit and the second time unit are frames. Alternatively, both the first time unit and the second time unit are symbols.

Optionally, a data length corresponding to the first time unit is N, a data length corresponding to the second time unit is N, and N is a positive integer greater than a first threshold, and may be random. The first threshold is a value related to a channel delay, and at least greater than a channel delay value, and may be set based on an actual demand.

It should be pointed out that when the first signal s(t) that is transmitted by the first device is received by the second device, the signal received by the second device is a carrier signal after the first signal s(t) is attenuated through a channel

$h_{st}(t)$ from the first device to the second device.

Step 52: Backscatter modulation is performed by the second device on the first signal by using a second signal, and a third signal is generated.

In this embodiment, the second signal is a baseband signal for modulating the first signal. The first signal includes the first portion and the second portion, the second signal includes a first sub-signal and a second sub-signal, and the third signal includes a third portion and a fourth portion. The first sub-signal corresponds to the first portion and is configured to modulate the first portion to obtain the third portion, and the second sub-signal corresponds to the second portion and is configured to modulate the second portion to obtain the fourth portion. The third portion occupies M first time units, and the fourth portion occupies M second time units. After modulation, bit information of the second signal carried in the third signal is characterized by a first change condition of the third portion and a second change condition of the fourth portion, and the first change condition is different from the second change condition. The first change condition indicates an identical or contrary condition between polarity changes of data in every two adjacent first time units in the third portion, and the second change condition indicates an identical or contrary condition between polarity changes of data in every two adjacent second time units in the fourth portion. For example, the first change condition indicates that corresponding polarity changes are identical, and the second change condition indicates that corresponding polarity changes are contrary to each other. Alternatively, the first change condition indicates that corresponding polarity changes are contrary to each other, and the second change condition indicates that corresponding polarity changes are identical.

Step 53: The third signal is transmitted by the second device.

For example, the second device receives the first signal s(t) that is transmitted by the first device, and the third signal d(t) generated after being modulated by the second signal (BSC baseband signal) by estimating a channel delay and delay spread from the first device to the second device, and taking the channel delay and delay spread from the first device to the second device as starting points may be expressed as:

$$d(t) = \alpha b(t) * h_{st}(t) * s(t)$$

In the formula, $\alpha$ indicates a reflection coefficient of an incident signal in the second device (BSC transmission device), b(t) indicates the second signal (BSC baseband signal), and $h_{st}(t)$ indicates a channel coefficient from the first device to the second device. That is to say, the second device backscatters and transmits the radio frequency signal modulated by the BSC per the reflection coefficient $\alpha$.

In this way, in a scenario of backscatter communication, strong direct link interference/self-interference can be eliminated by using a repetitive time domain structure of the first signal, and the bit information can be carried by using a polarity change pattern between adjacent time units in the second signal. Thus, the BSC reception device can demodulate a modulated signal merely by determining a polarity between a modulated reference signal and information signal, and demodulation complexity of the BSC demodulated signal is reduced.

In the embodiment of the disclosure, when the polarity changes of the data in every two adjacent first time units in the third portion are obtained, the polarity changes of the data in two adjacent first time units may be computed in sequence by combining a number M of the first time units included in the third portion and in consideration of parity of M. When the polarity changes of the data in every two adjacent first time units in the third portion are obtained, the polarity changes of the data in two adjacent second time units may be computed in sequence by combining a number M of the second time units included in the fourth portion and in consideration of parity of M as long as the bit information is carried by using the polarity change pattern between adjacent time units.

Optionally, in a case that M is equal to 4 and the bit information of the second signal carried in the third signal is a first value, the first change condition indicates that a first polarity change is identical to a second polarity change, and the second change condition indicates that a third polarity change is contrary to a fourth polarity change. Alternatively, in a case that the bit information of the second signal carried in the third signal is a second value, the first change condition indicates that a first polarity change is contrary to a second polarity change, and the second change condition indicates that a third polarity change is identical to a fourth polarity change. The first polarity change indicates a polarity change from data in a first first time unit to data in a second first time unit in the third portion, and the second polarity change indicates a polarity change from data in a third first time unit to data in a fourth first time unit in the third portion. Alternatively, the first polarity change indicates a polarity change from data in a second first time unit to data in a first first time unit in the third portion, and the second polarity change indicates a polarity change from data in a fourth first time unit to data in a third first time unit in the third portion. The third polarity change indicates a polarity change from data in a first second time unit to data in a second second time unit in the fourth portion, and the fourth polarity change indicates a polarity change from data in a third second time unit to data in a fourth second time unit in the fourth portion. Alternatively, the third polarity change indicates a polarity change from data in a second second time unit to data in a first second time unit in the fourth portion, and the fourth polarity change indicates a polarity change from data in a fourth second time unit to data in a third second time unit in the fourth portion.

Optionally, in a case that M is equal to 3 and the bit information of the second signal carried in the third signal is a first value, the first change condition indicates that a fifth polarity change is identical to a sixth polarity change, and the second change condition indicates that a seventh polarity change is contrary to an eighth polarity change. Alternatively, in a case that the bit information of the second signal carried in the third signal is a second value, the first change condition indicates that a fifth polarity change is contrary to a sixth polarity change, and the second change condition indicates that a seventh polarity change is identical to an eighth polarity change. The fifth polarity change indicates a polarity change from data in a first first time unit to data in a second first time unit in the third portion, and the sixth polarity change indicates a polarity change from the data in the second first time unit to data in a third first time unit in the third portion. Alternatively, the fifth polarity change indicates a polarity change from data in a second first time unit to data in a first first time unit in the third portion, and the sixth polarity change indicates a polarity change from data in a third first time unit to the data in the second first time unit in the third portion. The seventh polarity change indicates a polarity change from data in a first second time unit to data in a second second time unit in the fourth portion, and the eighth polarity change indicates a polarity change from the data in the second second time unit to data in a third second time unit in the fourth portion. Alternatively, the seventh polarity change indicates a polarity change from data in a second second time unit to data in a first second time unit in the fourth portion, and the eighth polarity change indicates a polarity change from data in a third second time unit to the data in the second second time unit in the fourth portion.

Optionally, the first value is equal to 1 and the second value is equal to 0. Alternatively, the first value is equal to 0 and the second value is equal to 1. In this way, by setting 0 and 1, a demodulation process of the modulated signal can be simplified.

It should be pointed out that although the embodiment is described with M equal to 3 or 4 as an example, the embodiment of the disclosure is not limited thereto, and M may alternatively be set as other values, for example, M equal to 5, 6 or 8.

The modulation process in the embodiment of the disclosure will be described below with both the first time unit and the second time unit as slots and M equal to 4 or 3 as an example.

Instance 1

In Instance 1, a first portion of a first signal includes 4 slots, and a second portion of the first signal includes 4 slots, that is, M is equal to 4, and a length of the first signal is equal to 8 slots. Assuming that a second signal b(t) includes a first sub-signal $b^R(mN + n)$ and a second sub-signal $b^D(mN + n)$, when $0 \leq m < M$ corresponds to the first sub-signal, $M \leq m < 2M$ corresponds to the second sub-signal, and mod indicates a symbol of taking the remainder, the first sub-signal corresponds to the first portion of the first signal and is configured to modulate the first portion to obtain a third portion of a third signal. The second sub-signal corresponds to the second portion of the first signal and is configured to modulate the second portion to obtain a fourth portion of the third signal. The second signal b(t) may satisfy any of the following conditions:

Case I: If bit information B = 1 transmitted by the second device, that is, the bit information of the second signal is 1, the case is as follows:

$$b^R(mN + n) = \begin{cases} -1, & \mathrm{mod}(m, 4) = 0, 0 \leq m < M \\ 1, & \mathrm{mod}(m, 4) = 1, 0 \leq m < M \\ -1, & \mathrm{mod}(m, 4) = 2, 0 \leq m < M \\ 1, & \mathrm{mod}(m, 4) = 3, 0 \leq m < M \end{cases}$$

$$b^D(mN + n) = \begin{cases} -1, & \mathrm{mod}(m, 4) = 0, M \leq m < 2M \\ 1, & \mathrm{mod}(m, 4) = 1, M \leq m < 2M \\ 1, & \mathrm{mod}(m, 4) = 2, M \leq m < 2M \\ -1, & \mathrm{mod}(m, 4) = 3, M \leq m < 2M \end{cases}$$

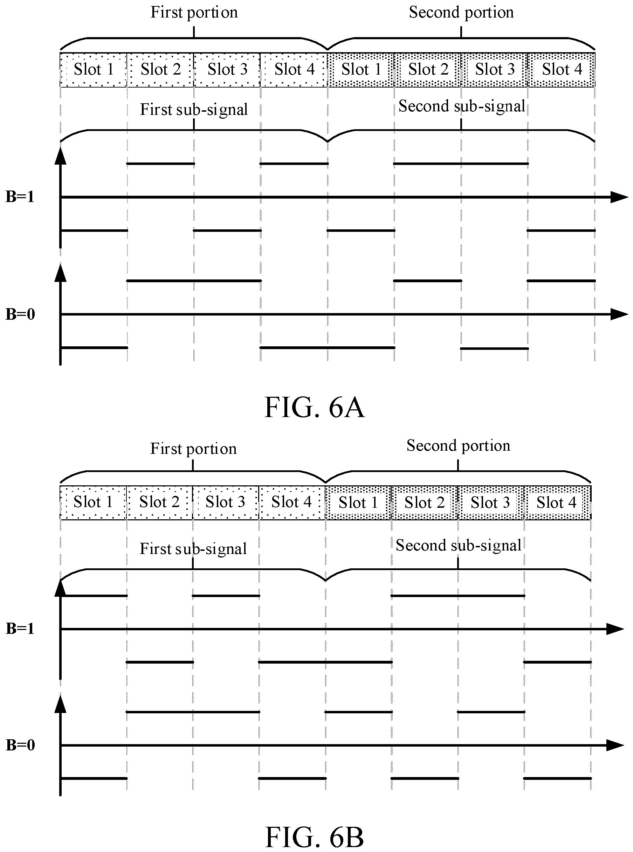

As shown in FIG. 6A, in the first sub-signal, slot 1 changes from a low level to slot 2 of a high level, that is, a polarity change is positive, and slot 3 changes from a low level to slot 4 of a high level, that is, a polarity change is positive. The polarity change from slot 1 to slot 2 is identical to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 3 to slot 4 in the third portion of the third signal. In the second sub-signal, slot 1 changes from a low level to slot 2 of a high level, that is, a polarity change is positive, and slot 3 changes from a high level to slot 4 of a low level, that is, a polarity change is negative. The polarity change from slot 1 to slot 2 is contrary to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 3 to slot 4 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information B = 0 transmitted by the second device, that is, the bit information of the second signal is 0, the case is as follows:

$$b^R(mN + n) = \begin{cases} -1, & \mathrm{mod}(m, 4) = 0, 0 \le m < M \\ 1, & \mathrm{mod}(m, 4) = 1, 0 \le m < M \\ 1, & \mathrm{mod}(m, 4) = 2, 0 \le m < M \\ -1, & \mathrm{mod}(m, 4) = 3, 0 \le m < M \end{cases}$$

$$b^D(mN + n) = \begin{cases} -1, & \mathrm{mod}(m, 4) = 0, M \le m < 2M \\ 1, & \mathrm{mod}(m, 4) = 1, M \le m < 2M \\ -1, & \mathrm{mod}(m, 4) = 2, M \le m < 2M \\ 1, & \mathrm{mod}(m, 4) = 3, M \le m < 2M \end{cases}$$

As shown in FIG. 6A, in the first sub-signal, slot 1 changes from a low level to slot 2 of a high level, that is, a polarity change is positive, and slot 3 changes from a high level to slot 4 of a low level, that is, a polarity change is negative. The polarity change from slot 1 to slot 2 is contrary to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 3 to slot 4 in the third portion of the third signal. In the second sub-signal, slot 1 changes from a low level to slot 2 of a high level, that is, a polarity change is positive, and slot 3 changes from a low level to slot 4 of a high level, that is, a polarity change is positive. The polarity change from slot 1 to slot 2 is identical to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 3 to slot 4 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case II: If bit information B = 1 transmitted by the second device, that is, the bit information of the second signal is 1, the case is as follows:

$$b^R(mN + n) = \begin{cases} 1, & \mathrm{mod}(m, 4) = 0, 0 \le m < M \\ -1, & \mathrm{mod}(m, 4) = 1, 0 \le m < M \\ 1, & \mathrm{mod}(m, 4) = 2, 0 \le m < M \\ -1, & \mathrm{mod}(m, 4) = 3, 0 \le m < M \end{cases}$$

$$b^D(mN + n) = \begin{cases} -1, & \mathrm{mod}(m, 4) = 0, M \le m < 2M \\ 1, & \mathrm{mod}(m, 4) = 1, M \le m < 2M \\ 1, & \mathrm{mod}(m, 4) = 2, M \le m < 2M \\ -1, & \mathrm{mod}(m, 4) = 3, M \le m < 2M \end{cases}$$

As shown in FIG. 6B, in the first sub-signal, slot 1 changes from a high level to slot 2 of a low level, that is, a polarity change is negative, and slot 3 changes from a high level to slot 4 of a low level, that is, a polarity change is negative. The polarity change from slot 1 to slot 2 is identical to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 3 to slot 4 in the third portion of the third signal. In the second sub-signal, slot 1 changes from a low level to slot 2 of a high level, that is, a polarity change is positive, and slot 3 changes from a high level to slot 4 of a low level, that is, a polarity change is negative.

The polarity change from slot 1 to slot 2 is contrary to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 3 to slot 4 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} -1, & \mod(m, 4) = 0, 0 \le m < M \\ 1, & \mod(m, 4) = 1, 0 \le m < M \\ 1, & \mod(m, 4) = 2, 0 \le m < M \\ -1, & \mod(m, 4) = 3, 0 \le m < M \end{cases}$$

$$b^D(mN + n) = \begin{cases} 1, & \mod(m, 4) = 0, M \le m < 2M \\ -1, & \mod(m, 4) = 1, M \le m < 2M \\ 1, & \mod(m, 4) = 2, M \le m < 2M \\ -1, & \mod(m, 4) = 3, M \le m < 2M \end{cases}$$

As shown in FIG. 6B, in the first sub-signal, slot 1 changes from a low level to slot 2 of a high level, that is, a polarity change is positive, and slot 3 changes from a high level to slot 4 of a low level, that is, a polarity change is negative. The polarity change from slot 1 to slot 2 is contrary to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 3 to slot 4 in the third portion of the third signal. In the second sub-signal, slot 1 changes from a high level to slot 2 of a low level, that is, a polarity change is negative, and slot 3 changes from a high level to slot 4 of a low level, that is, a polarity change is negative. The polarity change from slot 1 to slot 2 is identical to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 3 to slot 4 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case III: If bit information $B = 1$ transmitted by the second device, that is, the bit information of the second signal is 1, the case is as follows:

$$b^R(mN + n) = \begin{cases} -1, & \mod(m, 4) = 0, 0 \le m < M \\ 1, & \mod(m, 4) = 1, 0 \le m < M \\ -1, & \mod(m, 4) = 2, 0 \le m < M \\ 1, & \mod(m, 4) = 3, 0 \le m < M \end{cases}$$

$$b^D(mN + n) = \begin{cases} 1, & \mod(m, 4) = 0, M \le m < 2M \\ -1, & \mod(m, 4) = 1, M \le m < 2M \\ -1, & \mod(m, 4) = 2, M \le m < 2M \\ 1, & \mod(m, 4) = 3, M \le m < 2M \end{cases}$$

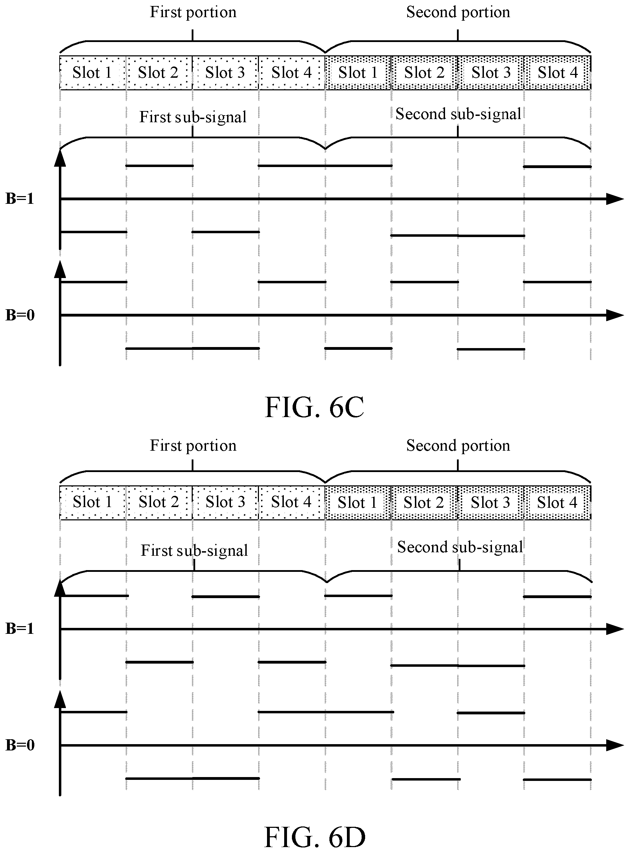

As shown in FIG. 6C, in the first sub-signal, slot 1 changes from a low level to slot 2 of a high level, that is, a polarity change is positive, and slot 3 changes from a low level to slot 4 of a high level, that is, a polarity change is positive. The polarity change from slot 1 to slot 2 is identical to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 3 to slot 4 in the third portion of the third signal. In the second sub-signal, slot 1 changes from a high level to slot 2 of a low level, that is, a polarity change is negative, and slot 3 changes from a low level to slot 4 of a high level, that is, a polarity change is positive. The polarity change from slot 1 to slot 2 is contrary to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 3 to slot 4 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 1, & \mathrm{mod}(m, 4) = 0, 0 \le m < M \\ -1, & \mathrm{mod}(m, 4) = 1, 0 \le m < M \\ -1, & \mathrm{mod}(m, 4) = 2, 0 \le m < M \\ 1, & \mathrm{mod}(m, 4) = 3, 0 \le m < M \end{cases}$$

$$b^D(mN + n) = \begin{cases} -1, & \mathrm{mod}(m, 4) = 0, M \le m < 2M \\ 1, & \mathrm{mod}(m, 4) = 1, M \le m < 2M \\ -1, & \mathrm{mod}(m, 4) = 2, M \le m < 2M \\ 1, & \mathrm{mod}(m, 4) = 3, M \le m < 2M \end{cases}$$

As shown in FIG. 6C, in the first sub-signal, slot 1 changes from a high level to slot 2 of a low level, that is, a polarity change is negative, and slot 3 changes from a low level to slot 4 of a high level, that is, a polarity change is positive. The polarity change from slot 1 to slot 2 is contrary to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 3 to slot 4 in the third portion of the third signal. In the second sub-signal, slot 1 changes from a low level to slot 2 of a high level, that is, a polarity change is positive, and slot 3 changes from a low level to slot 4 of a high level, that is, a polarity change is positive. The polarity change from slot 1 to slot 2 is identical to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 3 to slot 4 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case IV: If bit information $B = 1$ transmitted by the second device, that is, the bit information of the second signal is 1, the case is as follows:

$$b^R(mN + n) = \begin{cases} 1, & \mathrm{mod}(m, 4) = 0, 0 \le m < M \\ -1, & \mathrm{mod}(m, 4) = 1, 0 \le m < M \\ 1, & \mathrm{mod}(m, 4) = 2, 0 \le m < M \\ -1, & \mathrm{mod}(m, 4) = 3, 0 \le m < M \end{cases}$$

$$b^D(mN + n) = \begin{cases} 1, & \mathrm{mod}(m, 4) = 0, M \le m < 2M \\ -1, & \mathrm{mod}(m, 4) = 1, M \le m < 2M \\ -1, & \mathrm{mod}(m, 4) = 2, M \le m < 2M \\ 1, & \mathrm{mod}(m, 4) = 3, M \le m < 2M \end{cases}$$

As shown in FIG. 6D, in the first sub-signal, slot 1 changes from a high level to slot 2 of a low level, that is, a polarity change is negative, and slot 3 changes from a high level to slot 4 of a low level, that is, a polarity change is negative. The polarity change from slot 1 to slot 2 is identical to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 3 to slot 4 in the third portion of the third signal. In the second sub-signal, slot 1 changes from a high level to slot 2 of a low level, that is, a polarity change is negative, and slot 3 changes from a low level to slot 4 of a high level, that is, a polarity change is positive. The polarity change from slot 1 to slot 2 is contrary to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 3 to slot 4 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 1, & \mathrm{mod}(m, 4) = 0, 0 \le m < M \\ -1, & \mathrm{mod}(m, 4) = 1, 0 \le m < M \\ -1, & \mathrm{mod}(m, 4) = 2, 0 \le m < M \\ 1, & \mathrm{mod}(m, 4) = 3, 0 \le m < M \end{cases}$$

$$b^D(mN + n) = \begin{cases} 1, & \mathrm{mod}(m, 4) = 0, M \le m < 2M \\ -1, & \mathrm{mod}(m, 4) = 1, M \le m < 2M \\ 1, & \mathrm{mod}(m, 4) = 2, M \le m < 2M \\ -1, & \mathrm{mod}(m, 4) = 3, M \le m < 2M \end{cases}$$

As shown in FIG. 6D, in the first sub-signal, slot 1 changes from a low level to slot 2 of a high level, that is, a polarity change is negative, and slot 3 changes from a low level to slot 4 of a high level, that is, a polarity change is negative. The polarity change from slot 1 to slot 2 is identical to the polarity change from slot 3 to slot 4 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 3 to slot 4 in the third portion of the third signal. In the second sub-signal, slot 1 changes from a high level to slot 2 of a low level, that is, a polarity change is negative, and slot 3 changes from a high level to slot 4 of a low level, that is, a polarity change is negative. The polarity change from slot 1 to slot 2 is identical to the polarity change from slot 3 to slot 4 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 3 to slot 4 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Similarly, in another implementation, the case may alternatively be as follows: when the polarity changes corresponding to adjacent slots in the third portion of the third signal are contrary to each other, and the polarity changes corresponding to adjacent slots in the fourth portion of the third signal are identical, the bit information carried in the corresponding third signal is 1. When the polarity changes corresponding to adjacent slots in the third portion of the third signal are identical, and the polarity changes corresponding to adjacent slots in the fourth portion of the third signal are contrary to each other, the bit information carried in the corresponding third signal is 0. A specific modulation process is similar to the process described above, and will not be repeated herein.

In this way, the bit information can be carried by using a corresponding polarity change condition of adjacent slots in the third portion/the fourth portion of the third signal. Thus, a modulated signal can be demodulated merely by determining a polarity between a modulated third portion and a fourth portion of the third signal, and demodulation complexity of the BSC demodulated signal is reduced.

Instance 2

In Instance 2, a first portion of a first signal includes 3 slots, and a second portion of the first signal includes 3 slots, that is, M is equal to 3, and a length of the first signal is equal to 6 slots. Assuming that a second signal $b(t)$ includes a first sub-signal $b^R(mN + n)$ and a second sub-signal $b^D(mN + n)$, when $0 \le m < M$ corresponds to the first sub-signal, $M \le m < 2M$ corresponds to the second sub-signal, and mod indicates a symbol of taking the remainder, the first sub-signal corresponds to the first portion of the first signal and is configured to modulate the first portion to obtain a third portion of a third signal. The second sub-signal corresponds to the second portion of the first signal and is configured to modulate the second portion to obtain a fourth portion of the third signal. The second signal $b(t)$ may satisfy any of the following conditions:

Case I: If bit information $B = 1$ transmitted by the second device, that is, the bit information of the second signal is 1, the case is as follows:

$$b^R(mN + n) = \begin{cases} -1, & \mathrm{mod}(m, 3) = 0, 0 \le m < M \\ 0, & \mathrm{mod}(m, 3) = 1, 0 \le m < M \\ 1, & \mathrm{mod}(m, 3) = 2, 0 \le m < M \end{cases}$$

$$b^D(mN + n) = \begin{cases} -1, & \mathrm{mod}(m, 3) = 0, M \le m < 2M \\ 1, & \mathrm{mod}(m, 3) = 1, M \le m < 2M \\ 0, & \mathrm{mod}(m, 3) = 2, M \le m < 2M \end{cases}$$

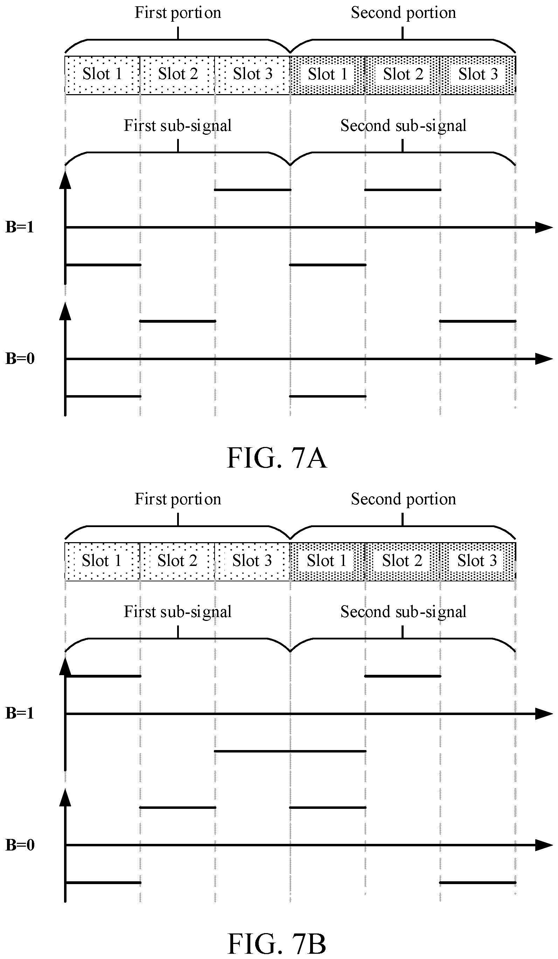

As shown in FIG. 7A, in the first sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a low level to slot 2 of a high level, that is, a polarity change is positive, and slot 2 changes from a high level to slot 3 of a level 0, that is, a polarity change is negative. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} -1, & \mathrm{mod}(m, 3) = 0, 0 \le m < M \\ 1, & \mathrm{mod}(m, 3) = 1, 0 \le m < M \\ 0, & \mathrm{mod}(m, 3) = 2, 0 \le m < M \end{cases}$$

$$b^D(mN + n) = \begin{cases} -1, & \mathrm{mod}(m, 3) = 0, M \le m < 2M \\ 0, & \mathrm{mod}(m, 3) = 1, M \le m < 2M \\ 1, & \mathrm{mod}(m, 3) = 2, M \le m < 2M \end{cases}$$

As shown in FIG. 7A, in the first sub-signal, slot 1 changes from a low level to slot 2 of a high level, that is, a polarity change is positive, and slot 2 changes from a high level to slot 3 of a level 0, that is, a polarity change is negative. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case II: If bit information $B = 1$ transmitted by the second device, that is, the bit information of the second signal is 1, the case is as follows:

$$b^R(mN + n) = \begin{cases} 1, & \mathrm{mod}(m, 3) = 0, 0 \leq m < M \\ 0, & \mathrm{mod}(m, 3) = 1, 0 \leq m < M \\ -1, & \mathrm{mod}(m, 3) = 2, 0 \leq m < M \end{cases}$$

$$b^D(mN + n) = \begin{cases} -1, & \mathrm{mod}(m, 3) = 0, M \leq m < 2M \\ 1, & \mathrm{mod}(m, 3) = 1, M \leq m < 2M \\ 0, & \mathrm{mod}(m, 3) = 2, M \leq m < 2M \end{cases}$$

As shown in FIG. 7B, in the first sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a low level to slot 2 of a high level, that is, a polarity change is positive, and slot 2 changes from a high level to slot 3 of a level 0, that is, a polarity change is negative. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} -1, & \mathrm{mod}(m, 3) = 0, 0 \leq m < M \\ 1, & \mathrm{mod}(m, 3) = 1, 0 \leq m < M \\ 0, & \mathrm{mod}(m, 3) = 2, 0 \leq m < M \end{cases}$$

$$b^D(mN + n) = \begin{cases} 1, & \mathrm{mod}(m, 3) = 0, M \leq m < 2M \\ 0, & \mathrm{mod}(m, 3) = 1, M \leq m < 2M \\ -1, & \mathrm{mod}(m, 3) = 2, M \leq m < 2M \end{cases}$$

As shown in FIG. 7B, in the first sub-signal, slot 1 changes from a low level to slot 2 of a high level, that is, a polarity change is positive, and slot 2 changes from a high level to slot 3 of a level 0, that is, a polarity change is negative. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case III: If bit information $B = 1$ transmitted by the second device, that is, the bit information of the second signal is 1, the case is as follows:

$$b^R(mN+n) = \begin{cases} -1, & \mathrm{mod}(m,3) = 0, 0 \le m < M \\ 0, & \mathrm{mod}(m,3) = 1, 0 \le m < M \\ 1, & \mathrm{mod}(m,3) = 2, 0 \le m < M \end{cases}$$

$$b^D(mN+n) = \begin{cases} 0, & \mathrm{mod}(m,3) = 0, M \le m < 2M \\ 1, & \mathrm{mod}(m,3) = 1, M \le m < 2M \\ -1, & \mathrm{mod}(m,3) = 2, M \le m < 2M \end{cases}$$

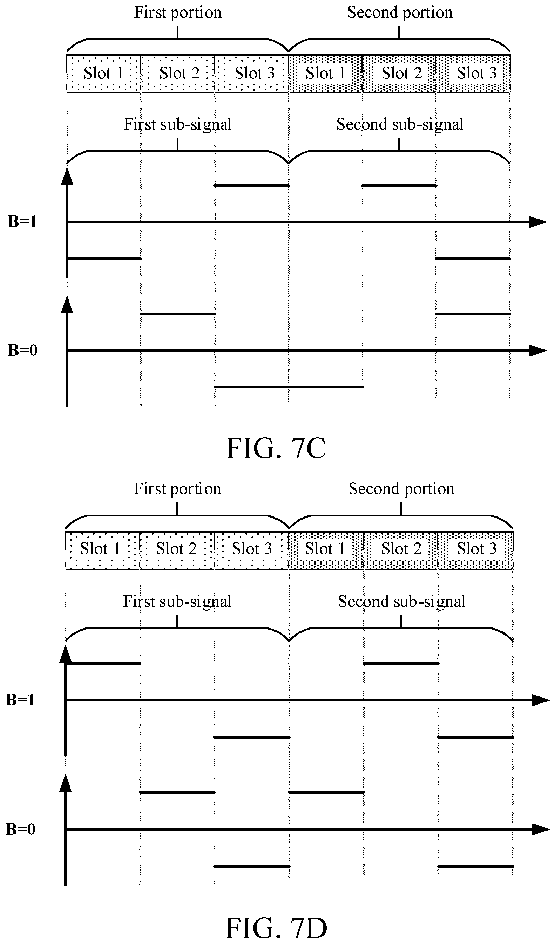

As shown in FIG. 7C, in the first sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a level 0 to slot 2 of a high level, that is, a polarity change is positive, and slot 2 changes from a high level to slot 3 of a low level, that is, a polarity change is negative. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information B = 0 transmitted by the second device, that is, the bit information of the second signal is 0, the case is as follows:

$$b^R(mN+n) = \begin{cases} 0, & \mathrm{mod}(m,3) = 0, 0 \le m < M \\ 1, & \mathrm{mod}(m,3) = 1, 0 \le m < M \\ -1, & \mathrm{mod}(m,3) = 2, 0 \le m < M \end{cases}$$

$$b^D(mN+n) = \begin{cases} -1, & \mathrm{mod}(m,3) = 0, M \le m < 2M \\ 0, & \mathrm{mod}(m,3) = 1, M \le m < 2M \\ 1, & \mathrm{mod}(m,3) = 2, M \le m < 2M \end{cases}$$

As shown in FIG. 7C, in the first sub-signal, slot 1 changes from a level 0 to slot 2 of a high level, that is, a polarity change is positive, and slot 2 changes from a high level to slot 3 of a low level, that is, a polarity change is negative. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case IV: If bit information B = 1 transmitted by the second device, that is, the bit information of the second signal is 1, the case is as follows:

$$b^R(mN+n) = \begin{cases} 1, & \mathrm{mod}(m,3) = 0, 0 \le m < M \\ 0, & \mathrm{mod}(m,3) = 1, 0 \le m < M \\ -1, & \mathrm{mod}(m,3) = 2, 0 \le m < M \end{cases}$$

$$b^D(mN+n) = \begin{cases} 0, & \mathrm{mod}(m,3)=0, M \le m < 2M \\ 1, & \mathrm{mod}(m,3)=1, M \le m < 2M \\ -1, & \mathrm{mod}(m,3)=2, M \le m < 2M \end{cases}$$

As shown in FIG. 7D, in the first sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a level 0 to slot 2 of a high level, that is, a polarity change is positive, and slot 2 changes from a high level to slot 3 of a low level, that is, a polarity change is negative. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN+n) = \begin{cases} 0, & \mathrm{mod}(m,3)=0, 0 \le m < M \\ 1, & \mathrm{mod}(m,3)=1, 0 \le m < M \\ -1, & \mathrm{mod}(m,3)=2, 0 \le m < M \end{cases}$$

$$b^D(mN+n) = \begin{cases} 1, & \mathrm{mod}(m,3)=0, M \le m < 2M \\ 0, & \mathrm{mod}(m,3)=1, M \le m < 2M \\ -1, & \mathrm{mod}(m,3)=2, M \le m < 2M \end{cases}$$

As shown in FIG. 7D, in the first sub-signal, slot 1 changes from a level 0 to slot 2 of a high level, that is, a polarity change is positive, and slot 2 changes from a high level to slot 3 of a low level, that is, a polarity change is negative. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case V: If bit information $B = 1$ transmitted by the second device, that is, the bit information of the second signal is 1, the case is as follows:

$$b^R(mN+n) = \begin{cases} -1, & \mathrm{mod}(m,3)=0, 0 \le m < M \\ 0, & \mathrm{mod}(m,3)=1, 0 \le m < M \\ 1, & \mathrm{mod}(m,3)=2, 0 \le m < M \end{cases}$$

$$b^D(mN + n) = \begin{cases} 0, & \mathrm{mod}(m, 3) = 0, M \leq m < 2M \\ -1, & \mathrm{mod}(m, 3) = 1, M \leq m < 2M \\ 1, & \mathrm{mod}(m, 3) = 2, M \leq m < 2M \end{cases}$$

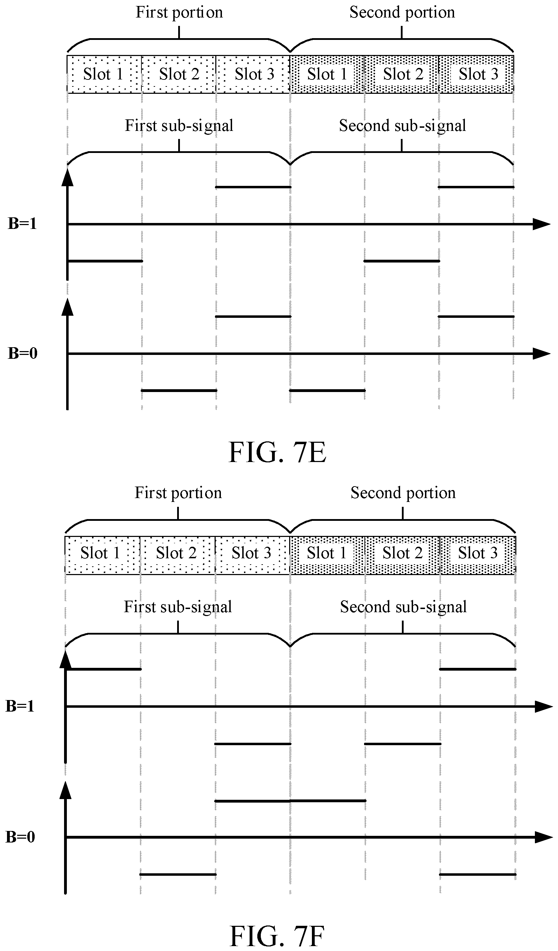

As shown in FIG. 7E, in the first sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a level 0 to slot 2 of a low level, that is, a polarity change is negative, and slot 2 changes from a low level to slot 3 of a high level, that is, a polarity change is positive. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 0, & \mathrm{mod}(m, 3) = 0, 0 \leq m < M \\ -1, & \mathrm{mod}(m, 3) = 1, 0 \leq m < M \\ 1, & \mathrm{mod}(m, 3) = 2, 0 \leq m < M \end{cases}$$

$$b^D(mN + n) = \begin{cases} -1, & \mathrm{mod}(m, 3) = 0, M \leq m < 2M \\ 0, & \mathrm{mod}(m, 3) = 1, M \leq m < 2M \\ 1, & \mathrm{mod}(m, 3) = 2, M \leq m < 2M \end{cases}$$

As shown in FIG. 7E, in the first sub-signal, slot 1 changes from a level 0 to slot 2 of a low level, that is, a polarity change is negative, and slot 2 changes from a low level to slot 3 of a high level, that is, a polarity change is positive. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion are contrary to each other, and the polarity changes corresponding to adjacent slots in the fourth portion are identical, the bit information carried in the corresponding third signal is 0.

Case VI: If bit information $B = 1$ transmitted by the second device, that is, the bit information of the second signal is 1, the case is as follows:

$$b^R(mN + n) = \begin{cases} 1, & \mathrm{mod}(m, 3) = 0, 0 \leq m < M \\ 0, & \mathrm{mod}(m, 3) = 1, 0 \leq m < M \\ -1, & \mathrm{mod}(m, 3) = 2, 0 \leq m < M \end{cases}$$

$$b^D(mN + n) = \begin{cases} 0, & \mathrm{mod}(m, 3) = 0, M \leq m < 2M \\ -1, & \mathrm{mod}(m, 3) = 1, M \leq m < 2M \\ 1, & \mathrm{mod}(m, 3) = 2, M \leq m < 2M \end{cases}$$

As shown in FIG. 7F, in the first sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a level 0 to slot 2 of a low level, that is, a polarity change is negative, and slot 2 changes from a low level to slot 3 of a high level, that is, a polarity change is positive. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 0, & \mathrm{mod}(m, 3) = 0, 0 \le m < M \\ -1, & \mathrm{mod}(m, 3) = 1, 0 \le m < M \\ 1, & \mathrm{mod}(m, 3) = 2, 0 \le m < M \end{cases}$$

$$b^D(mN + n) = \begin{cases} 1, & \mathrm{mod}(m, 3) = 0, M \le m < 2M \\ 0, & \mathrm{mod}(m, 3) = 1, M \le m < 2M \\ -1, & \mathrm{mod}(m, 3) = 2, M \le m < 2M \end{cases}$$

As shown in FIG. 7F, in the first sub-signal, slot 1 changes from a level 0 to slot 2 of a low level, that is, a polarity change is negative, and slot 2 changes from a low level to slot 3 of a high level, that is, a polarity change is positive. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case VII: If bit information $B = 1$ transmitted by the second device, that is, the bit information of the second signal is 1, the case is as follows:

$$b^R(mN + n) = \begin{cases} -1, & \mathrm{mod}(m, 3) = 0, 0 \le m < M \\ 0, & \mathrm{mod}(m, 3) = 1, 0 \le m < M \\ 1, & \mathrm{mod}(m, 3) = 2, 0 \le m < M \end{cases}$$

$$b^D(mN + n) = \begin{cases} 1, & \mathrm{mod}(m, 3) = 0, M \le m < 2M \\ -1, & \mathrm{mod}(m, 3) = 1, M \le m < 2M \\ 0, & \mathrm{mod}(m, 3) = 2, M \le m < 2M \end{cases}$$

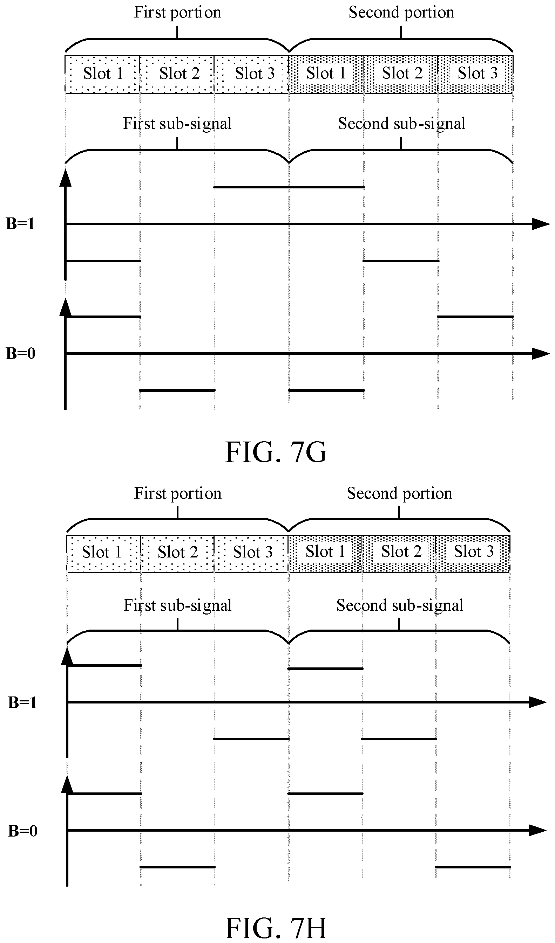

As shown in FIG. 7G, in the first sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a high level to slot 2 of a low level, that is, a polarity change is negative, and slot 2 changes from a low level to slot 3 of a level 0, that is, a polarity change is positive. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 1, & \mathrm{mod}(m, 3) = 0, 0 \leq m < M \\ -1, & \mathrm{mod}(m, 3) = 1, 0 \leq m < M \\ 0, & \mathrm{mod}(m, 3) = 2, 0 \leq m < M \end{cases}$$

$$b^D(mN + n) = \begin{cases} -1, & \mathrm{mod}(m, 3) = 0, M \leq m < 2M \\ 0, & \mathrm{mod}(m, 3) = 1, M \leq m < 2M \\ 1, & \mathrm{mod}(m, 3) = 2, M \leq m < 2M \end{cases}$$

As shown in FIG. 7G, in the first sub-signal, slot 1 changes from a high level to slot 2 of a low level, that is, a polarity change is negative, and slot 2 changes from a low level to slot 3 of a level 0, that is, a polarity change is positive. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a low level to slot 2 of a level 0, that is, a polarity change is positive, and slot 2 changes from a level 0 to slot 3 of a high level, that is, a polarity change is positive. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Case VIII: If bit information $B = 1$ transmitted by the second device, that is, the bit information of the second signal is 1, the case is as follows:

$$b^R(mN + n) = \begin{cases} 1, & \mathrm{mod}(m, 3) = 0, 0 \leq m < M \\ 0, & \mathrm{mod}(m, 3) = 1, 0 \leq m < M \\ -1, & \mathrm{mod}(m, 3) = 2, 0 \leq m < M \end{cases}$$

$$b^D(mN + n) = \begin{cases} 1, & \mathrm{mod}(m, 3) = 0, M \leq m < 2M \\ -1, & \mathrm{mod}(m, 3) = 1, M \leq m < 2M \\ 0, & \mathrm{mod}(m, 3) = 2, M \leq m < 2M \end{cases}$$

As shown in FIG. 7H, in the first sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is identical to a polarity change from slot 2 to slot 3 in the third portion of the third signal. In the second sub-signal, slot 1 changes from a high level to slot 2 of a low level, that is, a polarity change is negative, and slot 2 changes from a low level to slot 3 of a level 0, that is, a polarity change is positive. The polarity change from slot 1 to slot 2 is contrary to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is contrary to a polarity change from slot 2 to slot 3 in the fourth portion of the third signal. That is, when the polarity changes corresponding to adjacent slots in the third portion of the third signal are identical, and the polarity changes corresponding to adjacent slots in the fourth portion of the third signal are contrary to each other, the bit information carried in the corresponding third signal is 1.

If bit information $B = 0$ transmitted by the second device, that is, the bit information of the second signal is 0, the case is as follows:

$$b^R(mN + n) = \begin{cases} 1, & \mathrm{mod}(m, 3) = 0, 0 \le m < M \\ -1, & \mathrm{mod}(m, 3) = 1, 0 \le m < M \\ 0, & \mathrm{mod}(m, 3) = 2, 0 \le m < M \end{cases}$$

$$b^D(mN + n) = \begin{cases} 1, & \mathrm{mod}(m, 3) = 0, M \le m < 2M \\ 0, & \mathrm{mod}(m, 3) = 1, M \le m < 2M \\ -1, & \mathrm{mod}(m, 3) = 2, M \le m < 2M \end{cases}$$

As shown in FIG. 7H, in the first sub-signal, slot 1 changes from a high level to slot 2 of a low level, that is, a polarity change is negative, and slot 2 changes from a low level to slot 3 of a level 0, that is, a polarity change is positive. The polarity change from slot 1 to slot 2 is contrary to the polarity change from slot 2 to slot 3 in the first sub-signal. Since the third portion is obtained through modulation by the first sub-signal, a polarity change of the third portion is identical to the polarity change of the first sub-signal, and a polarity change from slot 1 to slot 2 is contrary to a polarity change from slot 2 to slot 3 in the third portion of the third signal. In the second sub-signal, slot 1 changes from a high level to slot 2 of a level 0, that is, a polarity change is negative, and slot 2 changes from a level 0 to slot 3 of a low level, that is, a polarity change is negative. The polarity change from slot 1 to slot 2 is identical to the polarity change from slot 2 to slot 3 in the second sub-signal. Since the fourth portion is obtained through modulation by the second sub-signal, a polarity change of the fourth portion is identical to the polarity change of the second sub-signal, and a polarity change from slot 1 to slot 2 is identical to a polarity change from slot 2 to slot 3 in the fourth portion of the third signal. That is, when the polarity changes corresponding to adjacent slots in the third portion of the third signal are contrary to each other, and the polarity changes corresponding to adjacent slots in the fourth portion of the third signal are identical, the bit information carried in the corresponding third signal is 0.

Similarly, in another implementation, the case may alternatively be as follows: when the polarity changes corresponding to adjacent slots in the third portion of the third signal are contrary to each other, and the polarity changes corresponding to adjacent slots in the fourth portion of the third signal are identical, the bit information carried in the corresponding modulated signal is 1. When the polarity changes corresponding to adjacent slots in the third portion of the third signal are identical, and the polarity changes corresponding to adjacent slots in the fourth portion of the third signal are contrary to each other, the bit information carried in the corresponding modulated signal is 0. A specific modulation process is similar to the process described above, and will not be repeated herein.

In this way, the bit information can be carried by using a corresponding polarity change condition of adjacent slots in the third portion/the fourth portion of the third signal. Thus, a modulated signal can be demodulated merely by determining a polarity between a modulated third portion and a fourth portion of the third signal, and demodulation complexity of the BSC demodulated signal is reduced.

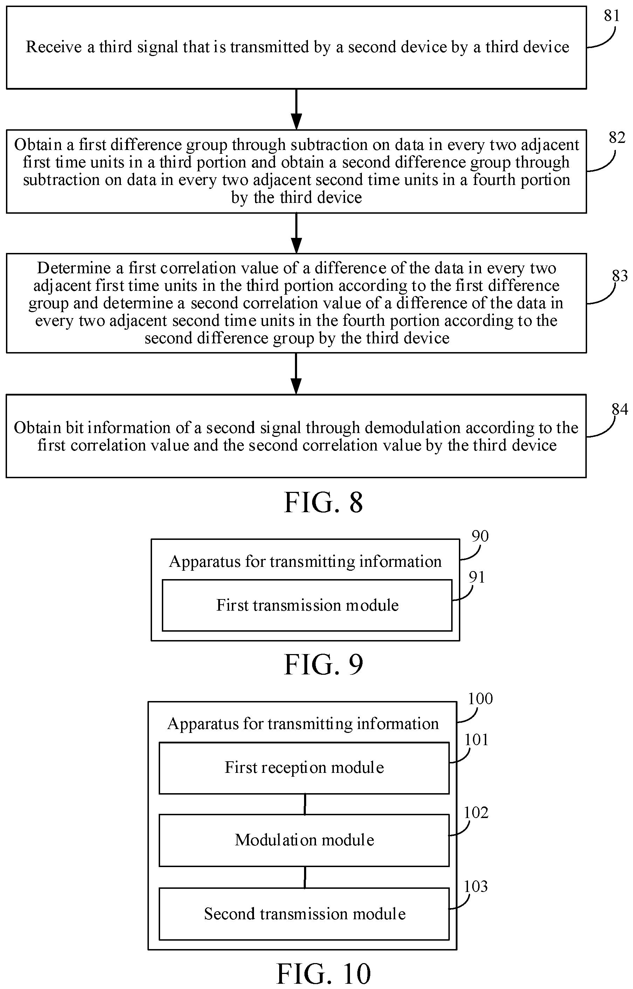

With reference to FIG. 8, FIG. 8 is a flowchart of a method for receiving information according to an embodiment of the disclosure. The method is applied to a third device. The third device is a BSC reception device, and includes, but is not limited to, a reader-writer. It should be pointed out that when the embodiment of the disclosure is applied to monostatic backscatter communication, the third device and a first device are physically identical devices and integrated together. However, when the embodiment of the disclosure is applied to bistatic backscatter communication, the third device and the first device are different devices. As shown in FIG. 8, the method for receiving information includes:

Step 81: A third signal that is transmitted by a second device is received by the third device.

In this embodiment, the third signal is a signal obtained after a first signal is modulated by a second signal (baseband signal) of the second device. The third signal includes a third portion and a fourth portion, the third portion occupies M first time units, the fourth portion occupies M second time units, and M is an integer greater than 2. Bit information of the second signal carried in the third signal is characterized by a first change condition of the third portion and a second change condition of the fourth portion, and the first change condition is different from the second change condition. The first change condition indicates an identical or contrary condition between polarity changes of data in every two adjacent first time units in the third portion, and the second change condition indicates an identical or contrary condition between polarity changes of data in every two adjacent second time units in the fourth portion. For example, the first change condition indicates that corresponding polarity changes are identical, and the second change condition indicates that corresponding polarity changes are contrary to each other. Alternatively, the first change condition indicates that corresponding polarity changes are contrary to each other, and the second change condition indicates that corresponding polarity changes are identical.

Optionally, the first time unit and the second time unit are time units of an identical type, and each may include any one of the following: a symbol (symbol), a slot (slot), a subframe (subframe) and a frame (frame). For example, both the first time unit and the second time unit are slots. Alternatively, both the first time unit and the second time unit are frames. Alternatively, both the first time unit and the second time unit are symbols.

Optionally, a data length corresponding to the first time unit is N, a data length corresponding to the second time unit is N, and N is a positive integer greater than a first threshold, and may be random. The first threshold is a value related to a channel delay, and at least greater than a channel delay value, and may be set based on an actual demand.

For example, if the first signal transmitted by the first device (that is, a radio frequency source) is s(t), a channel from the first device to the second device (that is, a BSC transmission device) is $h_{st}(t)$, the second signal modulated by the second device is b(t), a channel from the first device to the third device (that is, the BSC reception device) is $h_{sr}(t)$, a channel from the second device to the third device is $h_{tr}(t)$, and $\alpha$ indicates a reflection coefficient, a received signal y(t) of the third device may be expressed as:

$$y(t) = \alpha s(t - \tau_2)b(t)h_{st}h_{tr} + h_{sr}s(t - \tau_1) + w(t)$$

A first term $\alpha s(t - \tau_2)b(t)h_{st}h_{tr}$ indicates a useful backscattered signal transmitted from the second device, a second term $h_{sr}s(t - \tau_1)$ indicates a direct link interference signal transmitted from the first device, w(t) indicates a Gaussian noise portion, $\tau_1$ and $\tau_2$ indicate multipath delays of a direct link and a backscattered cascade link and $\tau_2 > \tau_1$, and a received signal delay of the third device may be defined as $\tau = \max\{\tau_1, \tau_2\}$.

Further, after symbol synchronization and a cascade channel delay are starting points, the received signal *y(t)* may be transformed as follows:

$$y(t) = h_{sr}(t) * s(t) + h_{tr}(t) * \alpha b(t) \cdot h_{st}(t) * s(t) + w(t)$$
$$= \big(h_{sr}(t) + h_{tr}(t) * \alpha b(t) \cdot h_{st}(t)\big) * s(t) + w(t)$$

Step 82: A first difference group is obtained by the third device through subtraction on the data in every two adjacent first time units in the third portion, and a second difference group is obtained by the third device through subtraction on the data in every two adjacent second time units in the fourth portion.

Step 83: A first correlation value of a difference of the data in every two adjacent first time units in the third portion is determined by the third device according to the first difference group, and a second correlation value of a difference of the data in every two adjacent second time units in the fourth portion is determined by the third device according to the second difference group.

In this embodiment, the first correlation value may characterize a similarity degree of the differences or a similarity degree of the polarity changes of the data in every two adjacent first time units in the third portion, and may be obtained by performing a correlation calculation on the difference of the data in every two adjacent first time units in the first difference group. The second correlation value may characterize a similarity degree of the difference or a similarity degree of the polarity change of the data in every two adjacent second time units in the fourth portion, and may be obtained by performing a correlation calculation on the difference of the data in every two adjacent second time units in the second difference group. That is, step 83 may include: the first correlation value is obtained by the third device through a correlation calculation on the difference of the data in every two adjacent first time units in the first difference group, and the second correlation value is obtained by the third device through a correlation calculation on the difference of the data in every two adjacent second time units in the second difference group. The correlation calculation includes, but is not limited to, multiplication and summation.

Step 84: The bit information of the second signal is obtained by the third device through demodulation according to the first correlation value and the second correlation value.

In this way, when the third device receives the third signal transmitted by the second device, the third device may receive the first signal transmitted by the first device. In this case, the first signal is the direct link interference signal, and the data in adjacent time units in the first portion of the first signal are identical, and the data in adjacent time units in the second portion of the first signal are identical, and a signal with a repetitive structure still maintains its repetitive structure after passing through the channel. In this way, through subtraction on the data in every two adjacent first time units in the third portion of the third signal and subtraction the data in every two adjacent second time units in the fourth portion of the third signal, the direct link interference signal can be eliminated. For the modulated third signal (that is, the backscattered signal), since the bit information of the second signal carried in the third signal is characterized by the first change condition of the third portion and the second change condition of the fourth portion, demodulation can be implemented based on the determined correlation values by determining the first correlation value of a corresponding difference in the third portion and the second correlation value of a corresponding difference in the fourth portion and in combination with a modulation rule. Thus, it is unnecessary to construct a specific decision threshold during demodulation, limitation from an effective repetitive structure length and influence from a channel environment such as the signal to noise ratio (Signal to Noise Ratio, SNR) do not exist, such that demodulation complexity of the third device can be greatly reduced and a system performance of backscatter communication can be improved.

In the embodiment of the disclosure, according to the modulation rule, the first difference group may be obtained by computing the difference between the data in every two adjacent first time units in the third portion of the third signal, and the second difference group may be obtained by computing the difference between the data in every two adjacent second time units in the fourth portion. Optionally, when M is equal to 4, the first difference group includes: a difference obtained by subtracting data in a first first time unit from data in a second first time unit in the third portion, and a difference obtained by subtracting data in a third first time unit from data in a fourth first time unit in the third portion. Alternatively, the first difference group includes: a difference obtained by subtracting data in a second first time unit from data in a first first time unit in the third portion, and a difference obtained by subtracting data in a fourth first time unit from data in a third first time unit in the third portion. The second difference group includes: a difference obtained by subtracting data in a first second time unit from data in a second second time unit in the fourth portion, and a difference obtained by subtracting data in a third second time unit from data in a fourth second time unit in the fourth portion. Alternatively, the second difference group includes: a difference obtained by subtracting data in a second second time unit from data in a first second time unit in the fourth portion, and a difference obtained by subtracting data in a fourth first time unit from data in a third first time unit in the fourth portion.

Optionally, when M is equal to 3, the first difference group includes: a difference obtained by subtracting data in a first first time unit from data in a second first time unit in the third portion, and a difference obtained by subtracting the data in the second first time unit from data in a third first time unit in the third portion. Alternatively, the first difference group includes: a difference obtained by subtracting data in a second first time unit from data in a first first time unit in the third portion, and a difference obtained by subtracting data in a third first time unit from the data in the second first time unit in the third portion. The second difference group includes: a difference obtained by subtracting data in a first second time unit from data in a second second time unit in the fourth portion, and a difference obtained by subtracting the data in the second second time unit from data in a third second time unit in the fourth portion. Alternatively, the second difference group includes: a difference obtained by subtracting data in a second second time unit from data in a first second time unit in the fourth portion, and a difference obtained by subtracting data in a third second time unit from the data in the second second time unit in the fourth portion.

In the embodiment of the disclosure, for noise smoothing, the second device may transmit P third signals, and P is an integer greater than 2. In this case, after the first difference group and the second difference group are obtained, a first average difference group is obtained by performing corresponding averaging (the corresponding averaging may be understood as averaging of differences corresponding to the P third portions) on differences included in P first difference groups corresponding to the P third signals and a second average difference group is obtained by performing corresponding averaging (the corresponding averaging may be understood as averaging of differences corresponding to the P fourth portions) on differences included in P second difference groups corresponding to the P third signals. Then, the first correlation value of the difference of the data in every two adjacent first time units in the third portion is determined according to the first average difference group and the second correlation value of the difference of the data in every two adjacent second time units in the fourth portion is determined according to the second average difference group.

Optionally, after obtaining the first average difference group and the second average difference group, the third device may obtain the first correlation value through correlation calculation on an average difference included in the first average difference group, and obtain the second correlation value through correlation calculation on an average difference included in the second average difference group. The correlation calculation includes, but is not limited to, multiplication and summation.

In the embodiment of the disclosure, the bit information of the second signal carried in the third signal is characterized by the first change condition of the third portion and the second change condition of the fourth portion, and the first change condition is different from the second change condition. The first change condition indicates the identical or contrary condition between the polarity changes of the data in every two adjacent first time units in the third portion, and the second change condition indicates the identical or contrary condition between the polarity changes of the data in every two adjacent second time units in the fourth portion. Thus, the similarity degree of the polarity changes of the data in every two adjacent first time units in the third portion is different from the similarity degree of the polarity changes of the data in every two adjacent second time units in the fourth portion, and the bit information of the second signal can be demodulated through comparison of the second correlation value of the fourth portion with the first correlation value of the third portion.

Optionally, the step that the bit information of the second signal is obtained through demodulation according to the first correlation value and the second correlation value may include: it is determined, in a case that the first correlation value is greater than or equal to the second correlation value, that the bit information of the second signal is a first value, and alternatively it is determined, in a case that the first correlation value is smaller than the second correlation value, that the bit information of the second signal is a second value according to a preset modulation and demodulation rule by the third device.

Optionally, the first value is equal to 1 and the second value is equal to 0. Alternatively, the first value is equal to 0 and the second value is equal to 1. In this way, by setting 0 and 1, a demodulation process of the modulated signal can be simplified.

The demodulation process in the embodiment of the disclosure will be described below with both the first time unit and the second time unit as slots and M equal to 4 or 3 as an example.

Instance 3

In Instance 3, a first portion of a first signal includes 4 slots, and a second portion of the first signal includes 4 slots, that is, M is equal to 4, and a length of the first signal is equal to 8 slots, which correspond to Instance 1 for describing the modulation process. A third device obtains a received signal y(t) after being synchronized. Then, every eight slots are taken as a basic slot block unit, first four slots are taken as a third portion of a modulated BSC baseband signal, and last four slots are taken as a fourth portion of the modulated BSC baseband signal. Two adjacent even and odd slots in the third portion and two adjacent even and odd slots in the fourth portion are subjected to subtraction to obtain a first difference group and a second difference group respectively.

For example, a first slot may be subtracted from a second slot in the third portion and a third slot may be subtracted from a fourth slot in the third portion to obtain the first difference group. In addition, a first slot may be subtracted from a second slot in the fourth portion and a third slot may be subtracted from a fourth slot in the fourth portion to obtain the second difference group.

For example, a difference computed in the third portion/the fourth portion may be expressed as follows:

$$z(mN + n) = y\big((m + 1)N + n\big) - y(mN + n)$$

$$= \alpha s(mN + n)\Big(b\big((m + 1)N + n\big) - b(mN + n)\Big)h_{st}h_{tr}$$

$$+ w\big((m + 1)N + n\big) - w(mN + n)$$

In the formula, $\tau_2 \leq n \leq N + \tau_1 - 1$, mod(m, 4) = even, $0 \leq m < M$; $z(mN + n)$ indicates a difference between $n^{th}$ data symbols in an $m+1^{th}$ slot and an $m^{th}$ slot. From the above expression, the following can be obtained: direct link interference term is eliminated since data s(t) of two adjacent slot are identical. But power of a noise term of the received signal rises, and the noise power becomes twice as high as previous noise power.

Optionally, if a radio frequency source (that is, a first device) transmits P repetitive first signals, noise smoothing may be implemented by using such P repetitive first signals. That is, differences included in the first difference group computed are subjected to corresponding averaging to obtain a first average difference group, and differences included in the second difference group computed are subjected to corresponding averaging to obtain a second average difference group as follows:

If the P repetitive first signals are centralized, $\bar{z}(n) = \frac{1}{P}\sum_{p=0}^{P-1} z(p2MN + n)$:

If the P repetitive first signals are distributed, $\bar{z}(n) = \frac{1}{P}\sum_{p=0}^{P-1} z(p(2MN + Q) + n)$:

In the formula, Q indicates a length of one data slot (Data slots) in the distributed structure, and the Data slots are slots of the radio frequency source used for other functions.

Optionally, after the first average difference group and the second average difference group are obtained, a correlation value $C_R$ of an average $\bar{z}(n)$ of the differences obtained of two adjacent even and odd slots in the third portion may be computed, and a correlation value $C_D$ of an average $\bar{z}(n)$ of the differences obtained of two adjacent even and odd slots in the fourth portion may be computed as follows:

$$C_R = \sum_{n=\tau_2}^{N+\tau_1-1} \bar{z}(n)\bar{z}(2N + n)$$

$$C_D = \sum_{n=4N+\tau_2}^{5N+\tau_1-1} \bar{z}(n)\bar{z}(2N+n)$$

In the formula, $\tau_1$ and $\tau_2$ indicates multipath delays of a direct link and a backscatter cascade link respectively and $\tau_2 > \tau_1$.

Further, combining a modulation and demodulation rule, bit information B of the BSC baseband signal (that is, a second signal) may be demodulated according to comparison of a relative size of $C_R$ and $C_D$ as follows:

$$B = \begin{cases} 1, & \text{if } C_R \geq C_D \\ 0, & \text{if } C_R < C_D \end{cases}$$

Specifically, in Instance 1, since polarity changes corresponding to adjacent slots in the third portion are identical and polarity changes corresponding to adjacent slots in the fourth portion are contrary to each other when B=1, a similarity degree of the polarity changes between adjacent slots in the third portion is greater than a similarity degree between adjacent slots in the fourth portion, that is, the correlation value $C_R$ corresponding to the third portion is greater than the correlation value $C_D$ corresponding to the fourth portion. Thus, during demodulation, if $C_R \geq C_D$, the bit information B=1 of the second signal may be determined. However, since polarity changes corresponding to adjacent slots in the third portion are contrary to each other and polarity changes corresponding to adjacent slots in the fourth portion are identical when B=0, a similarity degree of the polarity changes between adjacent slots in the third portion is smaller than a similarity degree between adjacent slots in the fourth portion, that is, the correlation value $C_R$ corresponding to the third portion is smaller than the correlation value $C_D$ corresponding to the fourth portion. Thus, during demodulation, if $C_R < C_D$, the bit information B=0 of the second signal may be determined.

Instance 4

In Instance 4, a first portion of a first signal includes 3 slots, and a second portion of the first signal includes 3 slots, that is, M is equal to 3, and a length of the first signal is equal to 6 slots, which correspond to Instance 2 for describing the modulation process. A third device obtains a received signal y(t) after being synchronized. Then, every six slots are taken as a basic slot block unit, first three slots are taken as a third portion of a modulated BSC baseband signal, and last three slots are taken as a fourth portion of the modulated BSC baseband signal. Two adjacent slots in the third portion and two adjacent slots in the fourth portion are subjected to subtraction to obtain a first difference group and a second difference group respectively.

For example, a first slot may be subtracted from a second slot in the third portion and the second slot may be subtracted from a third slot in the third portion to obtain the first difference group. In addition, a first slot may be subtracted from a second slot in the fourth portion and the second third slot may be subtracted from a third slot in the fourth portion to obtain the second difference group.

For example, a difference computed in the third signal may be expressed as follows:

$$z\big((m-1)N+n\big) = y(mN+n) - y\big((m-1)N+n\big)$$
$$= \alpha s\big((m-1)N+n\big)\Big(b(mN+n) - b\big((m-1)N+n\big)\Big)h_{st}h_{tr}$$
$$+ w(mN+n) - w\big((m-1)N+n\big)$$

$$z(mN+n) = y\big((m+1)N+n\big) - y(mN+n)$$
$$= \alpha s(mN+n)\Big(b\big((m+1)N+n\big) - b(mN+n)\Big)h_{st}h_{tr}$$
$$+ w\big((m+1)N+n\big) - w(mN+n)$$

In the formula, $\tau_2 \leq n \leq N + \tau_1 - 1$, mod(m, 3) = odd, $0 \leq m < M$; z(mN + n) indicates a difference between $n^{th}$ data symbols in an m+$1^{th}$ slot and an $m^{th}$ slot. From the above expression, the following can be obtained: direct link interference term is eliminated since data s(t) of two adjacent slot are identical. But power of a noise term of the received signal rises, and the noise power becomes twice as high as previous noise power.

Optionally, if a radio frequency source (that is, a first device) transmits P repetitive first signals, noise smoothing may be implemented by using such P repetitive first signals. That is, differences included in the first difference group computed are subjected to corresponding averaging to obtain a first average difference group, and differences included in the second difference group computed are subjected to corresponding averaging to obtain a second average difference group as follows:

If the P repetitive first signals are centralized, $\overline{z}(n) = \frac{1}{P}\sum_{p=0}^{P-1} z(p2MN + n)$ :

If the P repetitive first signals are distributed, $\overline{z}(n) = \frac{1}{P}\sum_{p=0}^{P-1} z(p(2MN + Q) + n)$:

In the formula, Q indicates a length of one data slot (Data slots) in the distributed structure, and the Data slots are slots of the radio frequency source used for other functions.

Optionally, after the first average difference group and the second average difference group are obtained, a correlation value $C_R$ of an average $\overline{z}(n)$ of the two differences obtained of two adjacent front and back slots in the third portion may be computed, and a correlation value $C_D$ of an average $\overline{z}(n)$ of the two differences obtained of two adjacent front and back slots in the fourth portion may be computed as follows:

$$C_R = \sum_{n=\tau_2}^{N+\tau_1-1} \overline{z}(n)\overline{z}(N+n)$$

$$C_D = \sum_{n=3N+\tau_2}^{4N+\tau_1-1} \overline{z}(n)\overline{z}(N+n)$$

In the formula, $\tau_1$ and $\tau_2$ indicates multipath delays of a direct link and a backscatter cascade link respectively and $\tau_2 > \tau_1$.

Further, combining a modulation rule, bit information B of the BSC baseband signal (that is, a second signal) may be demodulated according to comparison of a relative size of $C_R$ and $C_D$ as follows:

$$B = \begin{cases} 1, & \text{if } C_R \geq C_D \\ 0, & \text{if } C_R < C_D \end{cases}$$

Specifically, in Instance 2, since polarity changes corresponding to adjacent slots in the third portion are identical and polarity changes corresponding to adjacent slots in the fourth portion are contrary to each other when B=1, a similarity degree of the polarity changes between adjacent slots in the third portion is greater than a similarity degree between adjacent slots in the fourth portion, that is, the correlation value $C_R$ corresponding to the third portion is greater than the correlation value $C_D$ corresponding to the fourth portion. Thus, during demodulation, if $C_R \geq C_D$, the bit information B=1 of the second signal may be determined. However, since polarity changes corresponding to adjacent slots in the third portion are contrary to each other and polarity changes corresponding to adjacent slots in the fourth portion are identical when B=0, a similarity degree of the polarity changes between adjacent slots in the third portion is smaller than a similarity degree between adjacent slots in the fourth portion, that is, the correlation value $C_R$ corresponding to the third portion is smaller than the correlation value $C_D$ corresponding to the fourth portion. Thus, during demodulation, if $C_R < C_D$, the bit information B=0 of the second signal may be determined.

An execution subject of the method for transmitting information according to the embodiment of the disclosure may be an apparatus for transmitting information. In the embodiment of the disclosure, the apparatus for transmitting information according to the embodiment of the disclosure is described with the apparatus for transmitting information executing the method for transmitting information as an example.

With reference to FIG. 9, FIG. 9 is a schematic structural diagram of an apparatus for transmitting information according to the embodiment of the disclosure. The apparatus is applied to a first device. The first device is a radio frequency source, and includes, but is not limited to, a device such as a base station and a television tower that transmits a radio frequency signal/carrier signal. As shown in FIG. 9, the apparatus 90 for transmitting information includes:

a first transmission module 91, configured to transmit a first signal. The first signal includes a first portion and a second portion. The first portion occupies M first time units, and data in the M first time units are identical. The second portion occupies M second time units, and data in the M second time units are identical. The data in the first time units are identical or contrary to the data in the second time units, and M is an integer greater than 2.

Optionally, the first time unit and the second time unit are time units of an identical type, and each include any one of the following: a symbol, a slot, a subframe and a frame.

Optionally, the data in the first time unit are a non-random sequence or a random sequence and the data in the second time unit are a non-random sequence or a random sequence.

Optionally, the first transmission module 91 is further configured to: transmit P repetitive first signals. The P repetitive first signals are distributed in a centralized manner or a distributed manner, and P is an integer greater than or equal to 2.

Optionally, a data length corresponding to the first time unit is N, a data length corresponding to the second time unit is N, and N is a positive integer greater than a first threshold.

The apparatus for transmitting information 90 according to the embodiment of the disclosure can implement various processes implemented by the method embodiment of FIG. 2, and achieve the same technical effect, which will not be repeated herein for avoiding repetition.

With reference to FIG. 10, FIG. 10 is a schematic structural diagram of an apparatus for transmitting information according to an embodiment of the disclosure. The apparatus is applied to a second device. The second device is a BSC transmission device, and includes, but is not limited to, a tab (Tag) and a passive or semi-passive Internet of Things (IoT) device. As shown in FIG. 10, the apparatus 100 for transmitting information includes:

a first reception module 101, configured to receive a first signal that is transmitted by a first device, where the first signal includes a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2;

a modulation module 102, configured to perform backscatter modulation on the first signal by using a second signal, and generate a third signal; where the second signal includes a first sub-signal and a second sub-signal, and the third signal includes a third portion and a fourth portion; the first sub-signal is configured to modulate the first portion to obtain the third portion, and the second sub-signal is configured to modulate the second portion to obtain the fourth portion; bit information of the second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion; and

a second transmission module 103, configured to transmit the third signal.

Optionally, the first time unit and the second time unit are time units of an identical type, and each include any one of the following: a symbol, a slot, a subframe and a frame.

Optionally, in a case that M is equal to 4 and the bit information is a first value, the first change condition indicates that a first polarity change is identical to a second polarity change, and the second change condition indicates that a third polarity change is contrary to a fourth polarity change. Alternatively, in a case that the bit information is a second value, the first change condition indicates that a first polarity change is contrary to a second polarity change, and the second change condition indicates that a third polarity change is identical to a fourth polarity change.

The first polarity change indicates a polarity change from data in a first first time unit to data in a second first time unit in the third portion, and the second polarity change indicates a polarity change from data in a third first time unit to data in a fourth first time unit in the third portion. Alternatively, the first polarity change indicates a polarity change from data in a second first time unit to data in a first first time unit in the third portion, and the second polarity change indicates a polarity change from data in a fourth first time unit to data in a third first time unit in the third portion.

The third polarity change indicates a polarity change from data in a first second time unit to data in a second second time unit in the fourth portion, and the fourth polarity change indicates a polarity change from data in a third second time unit to data in a fourth second time unit in the fourth portion. Alternatively, the third polarity change indicates a polarity change from data in a second second time unit to data in a first second time unit in the fourth portion, and the fourth polarity change indicates a polarity change from data in a fourth second time unit to data in a third second time unit in the fourth portion.

Optionally, in a case that M is equal to 3 and the bit information is a first value, the first change condition indicates that a fifth polarity change is identical to a sixth polarity change, and the second change condition indicates that a seventh polarity change is contrary to an eighth polarity change. Alternatively, in a case that the bit information is a second value, the first change condition indicates that a fifth polarity change is contrary to a sixth polarity change, and the second change condition indicates that a seventh polarity change is identical to an eighth polarity change.

The fifth polarity change indicates a polarity change from data in a first first time unit to data in a second first time unit in the third portion, and the sixth polarity change indicates a polarity change from the data in the second first time unit to data in a third first time unit in the third portion. Alternatively, the fifth polarity change indicates a polarity change from data in a second first time unit to data in a first first time unit in the third portion, and the sixth polarity change indicates a polarity change from data in a third first time unit to the data in the second first time unit in the third portion.

The seventh polarity change indicates a polarity change from data in a first second time unit to data in a second second time unit in the fourth portion, and the eighth polarity change indicates a polarity change from the data in the second second time unit to data in a third second time unit in the fourth portion. Alternatively, the seventh polarity change indicates a polarity change from data in a second second time unit to data in a first second time unit in the fourth portion, and the eighth polarity change indicates a polarity change from data in a third second time unit to the data in the second second time unit in the fourth portion.

Optionally, the first value is equal to 1 and the second value is equal to 0. Alternatively, the first value is equal to 0 and the second value is equal to 1.

Optionally, a data length corresponding to the first time unit is N, a data length corresponding to the second time unit is N, and N is a positive integer greater than a first threshold.

The apparatus for transmitting information 100 according to the embodiment of the disclosure can implement various processes implemented by the method embodiment of FIG. 5, and achieve the same technical effect, which will not be repeated herein for avoiding repetition.

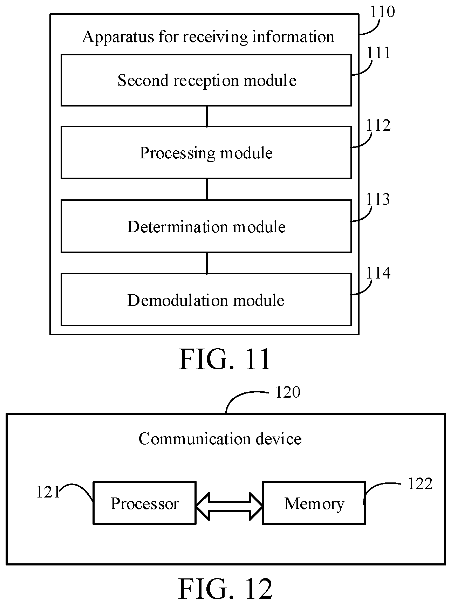

With reference to FIG. 11, FIG. 11 is a schematic structural diagram of an apparatus for receiving information according to an embodiment of the disclosure. The apparatus is applied to a third device. The third device is a BSC reception device, and includes, but is not limited to, a reader-writer. As shown in FIG. 11, the apparatus 110 for receiving information includes:

a second reception module 111, configured to receive a third signal that is transmitted by a second device; where the third signal includes a third portion and a fourth portion, the third portion occupies M first time units, the fourth portion occupies M second time units, and M is an integer greater than 2; bit information of a second signal carried in the third signal is characterized by a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion;

a processing module 112, configured to obtain a first difference group through subtraction on the data in every two adjacent first time units in the third portion and obtain a second difference group through subtraction on the data in every two adjacent second time units in the fourth portion;

a determination module 113, configured to determine a first correlation value of a difference of the data in every two adjacent first time units in the third portion according to the first difference group and determine a second correlation value of a difference of the data in every two adjacent second time units in the fourth portion according to the second difference group; and

a demodulation module 114, configured to obtain the bit information of the second signal through demodulation according to the first correlation value and the second correlation value.

Optionally, the first time unit and the second time unit are time units of an identical type, and each include any one of the following: a symbol, a slot, a subframe and a frame.

Optionally, when M is equal to 4, the first difference group includes: a difference obtained by subtracting data in a first first time unit from data in a second first time unit in the third portion, and a difference obtained by subtracting data in a third first time unit from data in a fourth first time unit in the third portion. Alternatively, the first difference group includes: a difference obtained by subtracting data in a second first time unit from data in a first first time unit in the third portion, and a difference obtained by subtracting data in a fourth first time unit from data in a third first time unit in the third portion.

The second difference group includes: a difference obtained by subtracting data in a first second time unit from data in a second second time unit in the fourth portion, and a difference obtained by subtracting data in a third second time unit from data in a fourth second time unit in the fourth portion. Alternatively, the second difference group includes: a difference obtained by subtracting data in a second second time unit from data in a first second time unit in the fourth portion, and a difference obtained by subtracting data in a fourth second time unit from data in a third second time unit in the fourth portion.

Optionally, when M is equal to 3, the first difference group includes: a difference obtained by subtracting data in a first first time unit from data in a second first time unit in the third portion, and a difference obtained by subtracting data in a second first time unit from data in a third first time unit in the third portion. Alternatively, the first difference group includes: a difference obtained by subtracting data in a second first time unit from data in a first first time unit in the third portion, and a difference obtained by subtracting data in a third first time unit from data in a second first time unit in the third portion.

The second difference group includes: a difference obtained by subtracting data in a first second time unit from data in a second second time unit in the fourth portion, and a difference obtained by subtracting the data in the second second time unit from data in a third second time unit in the fourth portion. Alternatively, the second difference group includes: a difference obtained by subtracting data in a second second time unit from data in a first second time unit in the fourth portion, and a difference obtained by subtracting data in a third second time unit from the data in the second second time unit in the fourth portion.

Optionally, the third signal includes P basic signals, each basic signal includes the third portion and the fourth portion, and P is an integer greater than or equal to 2.

The processing module 112 is further configured to: obtain a first average difference group by performing corresponding averaging on differences of P basic signals included in the first difference group and obtain a second average difference group by performing corresponding averaging on differences of P basic signals included the second difference group.

The determination module 113 is further configured to: determine the first correlation value according to the first average difference group and determine the second correlation value according to the second average difference group.

Optionally, the determination module 113 is further configured to: obtain the first correlation value through a correlation calculation on the difference of the data in every two adjacent first time units in the first difference group and obtain the second correlation value through a correlation calculation on the difference of the data in every two adjacent second time units in the second difference group.

Optionally, the demodulation module 114 is further configured to: determine, in a case that the first correlation value is greater than or equal to the second correlation value, that the bit information of the second signal is a first value, and alternatively determine, in a case that the first correlation value is smaller than the second correlation value, that the bit information of the second signal is a second value according to a preset modulation rule.

Optionally, the first value is equal to 1 and the second value is equal to 0. Alternatively, the first value is equal to 0 and the second value is equal to 1.

The apparatus for receiving information 110 according to the embodiment of the disclosure can implement various processes implemented by the method embodiment of FIG. 8, and achieve the same technical effect, which will not be repeated herein for avoiding repetition.

Optionally, as shown in FIG. 12, the embodiment of the disclosure further provides a communication device 120. The communication apparatus includes a processor 121 and a memory 122, and the memory 122 stores a program or an instruction that is runnable on the processor 121. For example, when the communication device 120 is a first device, the program or the instruction implements steps of the embodiment of the method for transmitting information shown in FIG. 2 when executed by the processor 121, and can achieve the same technical effect. When the communication device 120 is a second device, the program or the instruction implements steps of the embodiment of the method for transmitting information shown in FIG. 5 when executed by the processor 121, and can achieve the same technical effect. When the communication device 120 is a third device, the program or the instruction implements steps of the embodiment of the method for receiving information shown in FIG. 8 when executed by the processor 121, and can achieve the same technical effect, which will not be repeated herein for avoiding repetition.

The embodiment of the disclosure further provides a readable storage medium. The readable storage medium stores a program or an instruction. When executed by a processor, the program or the instruction implements the processes of the embodiment of the method for transmitting information or the processes of the embodiment of the method for receiving information, and can achieve the same technical effect, which will not be repeated herein for avoiding repetition

The processor is a processor in a terminal described in the embodiment. The readable storage medium includes a computer readable storage medium, such as a computer read-only memory (ROM), a random access memory (RAM), a magnetic disk and a optical disk.

The embodiment of the disclosure further provides a chip. The chip includes: a processor and a communication interface. The communication interface is coupled to the processor, and the processor is configured to run a program or an instruction to implement the processes of the embodiment of the method for transmitting information or the processes of the embodiment of the method for receiving information, and can achieve the same technical effect, which will not be repeated herein for avoiding repetition

It should be understood that the chip in the embodiment of the disclosure may be referred to as a system on chip, a system chip, a chip system, an on-chip system chip, etc.

The embodiment of the disclosure further provides a computer program/program product. The computer program/program product is stored in a storage medium, and the computer program/program product is executed by at least one processor to implement the processes of the embodiment of the method for transmitting information or the processes of the embodiment of the method for receiving information, and can achieve the same technical effect, which will not be repeated herein for avoiding repetition.

The embodiment of the disclosure further provides a communication system. The communication system includes at least two of a first device, a second device and a third device. The first device may be configured to implement steps of the method for transmitting information in FIG. 2, the second device is configured to implement steps of the method for transmitting information in FIG. 5, and the third device is configured to implement steps of the method for receiving information in FIG. 8.

It should be noted that in this context, the terms "comprise", "include" or their any other variations are intended to cover non-exclusive inclusions, such that a process, a method, an article or an apparatus including a series of elements include those elements, and further includes other elements not listed clearly, or further include elements inherent to such a process, method, article or apparatus. In the case of no more limitation, an element limited by the phrase "comprise a..."or "include a..." does not exclude other same element existing in the process, method, article or apparatus including the element. In addition, it should be pointed out that the range of the method and apparatus in the implementation of the disclosure is not limited to execution of functions in order shown or discussed, and can further include execution of functions involved in a substantially simultaneous manner or in reverse order. For example, the described method can be executed in order different from that described, and various steps can be added, omitted, or combined. In addition, features described with reference to some examples can be combined in other examples.

It can be clearly understood by those skilled in the art from the description of the implementation that the method embodiment can be implemented by means of software and necessary general hardware platforms, and can be implemented certainly through the hardware, of which the former is a preferred implementation in many cases. Based on such understanding, the technical solution in essence of the disclosure or the part that contributes to the prior art may be embodied in the form of computer software products. The computer software products are stored in the storage medium (such as a read-only memory/a random access memory (ROM/RAM), a diskette and an optical disk), and include several instructions to make a terminal (which may be a mobile phone, a computer, a server, an air conditioner, a network device, etc.) execute the method of the embodiments of the disclosure.

The embodiments of the disclosure have been described above with reference to the accompanying drawings, but the disclosure is not limited to the above particular implementation, which are merely schematic rather than restrictive. Under the inspiration of the disclosure, those skilled in the art can make many forms without departing from the purposes of the disclosure and the protection scope of the claims, which should fall within protection of the disclosure.

## Claims

1. A method for transmitting information, comprising:
   transmitting a first signal by a first device, wherein the first signal comprises a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2.

2. The method according to claim 1, wherein the first time unit and the second time unit are time units of an identical type, and each comprises any one of the following: a symbol, a slot, a subframe and a frame.

3. The method according to claim 1 or 2, wherein the data in the first time unit are a non-random sequence or a random sequence and the data in the second time unit are a non-random sequence or a random sequence.

4. The method according to claim 1 or 2, wherein the transmitting a first signal comprises:
   transmitting P repetitive first signals by the first device, wherein the P repetitive first signals are distributed in a centralized manner or a distributed manner, and P is an integer greater than or equal to 2.

5. The method according to claim 1, wherein a data length corresponding to the first time unit is N, a data length corresponding to the second time unit is N, and N is a positive integer greater than a first threshold.

6. A method for transmitting information, comprising:

   receiving, by a second device, a first signal that is transmitted by a first device, wherein the first signal comprises a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2;

performing, by the second device, backscatter modulation on the first signal by using a second signal, and generating a third signal, wherein the second signal comprises a first sub-signal and a second sub-signal, and the third signal comprises a third portion and a fourth portion; the first sub-signal is configured to modulate the first portion to obtain the third portion, and the second sub-signal is configured to modulate the second portion to obtain the fourth portion; bit information of the second signal carried in the third signal is **characterized by** a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion; and
transmitting the third signal by the second device.

7. The method according to claim 6, wherein the first time unit and the second time unit are time units of an identical type, and each comprises any one of the following: a symbol, a slot, a subframe and a frame.

8. The method according to claim 6 or 7, wherein in a case that M is equal to 4,

in a case that the bit information is a first value, the first change condition indicates that a first polarity change is identical to a second polarity change, and the second change condition indicates that a third polarity change is contrary to a fourth polarity change; and alternatively, in a case that the bit information is a second value, the first change condition indicates that a first polarity change is contrary to a second polarity change, and the second change condition indicates that a third polarity change is identical to a fourth polarity change, wherein
the first polarity change indicates a polarity change from data in a first first time unit to data in a second first time unit in the third portion, and the second polarity change indicates a polarity change from data in a third first time unit to data in a fourth first time unit in the third portion; and alternatively, the first polarity change indicates a polarity change from data in a second first time unit to data in a first first time unit in the third portion, and the second polarity change indicates a polarity change from data in a fourth first time unit to data in a third first time unit in the third portion; and
the third polarity change indicates a polarity change from data in a first second time unit to data in a second second time unit in the fourth portion, and the fourth polarity change indicates a polarity change from data in a third second time unit to data in a fourth second time unit in the fourth portion; and alternatively, the third polarity change indicates a polarity change from data in a second second time unit to data in a first second time unit in the fourth portion, and the fourth polarity change indicates a polarity change from data in a fourth second time unit to data in a third second time unit in the fourth portion.

9. The method according to claim 6 or 7, wherein in a case that M is equal to 3,

in a case that the bit information is a first value, the first change condition indicates that a fifth polarity change is identical to a sixth polarity change, and the second change condition indicates that a seventh polarity change is contrary to an eighth polarity change; and alternatively, in a case that the bit information is a second value, the first change condition indicates that a fifth polarity change is contrary to a sixth polarity change, and the second change condition indicates that a seventh polarity change is identical to an eighth polarity change, wherein
the fifth polarity change indicates a polarity change from data in a first first time unit to data in a second first time unit in the third portion, and the sixth polarity change indicates a polarity change from the data in the second first time unit to data in a third first time unit in the third portion; and alternatively, the fifth polarity change indicates a polarity change from data in a second first time unit to data in a first first time unit in the third portion, and the sixth polarity change indicates a polarity change from data in a third first time unit to the data in the second first time unit in the third portion; and
the seventh polarity change indicates a polarity change from data in a first second time unit to data in a second second time unit in the fourth portion, and the eighth polarity change indicates a polarity change from the data in the second second time unit to data in a third second time unit in the fourth portion; and alternatively, the seventh polarity change indicates a polarity change from data in a second second time unit to data in a first second time unit in the fourth portion, and the eighth polarity change indicates a polarity change from data in a third second time unit to the data in the second second time unit in the fourth portion.

10. The method according to claim 8 or 9, wherein the first value is equal to 1 and the second value is equal to 0; and alternatively, the first value is equal to 0 and the second value is equal to 1.

11. The method according to any one of claims 6 to 10, wherein a data length corresponding to the first time unit is N, a data length corresponding to the second time unit is N, and N is a positive integer greater than a first threshold.

12. A method for receiving information, comprising:

receiving, by a third device, a third signal that is transmitted by a second device, wherein the third signal comprises a third portion and a fourth portion, the third portion occupies M first time units, the fourth portion occupies M second time units, and M is an integer greater than 2; bit information of a second signal carried in the third signal is **characterized by** a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion;

obtaining, by the third device, a first difference group through subtraction on the data in every two adjacent first time units in the third portion, and obtaining, by the third device, a second difference group through subtraction on the data in every two adjacent second time units in the fourth portion;

determining, by the third device, a first correlation value of a difference of the data in every two adjacent first time units in the third portion according to the first difference group, and determining, by the third device, a second correlation value of a difference of the data in every two adjacent second time units in the fourth portion according to the second difference group; and

obtaining, by the third device, the bit information of the second signal through demodulation according to the first correlation value and the second correlation value.

13. The method according to claim 12, wherein the first time unit and the second time unit are time units of an identical type, and each comprises any one of the following: a symbol, a slot, a subframe and a frame.

14. The method according to claim 12 or 13, wherein in a case that M is equal to 4,

the first difference group comprises: a difference obtained by subtracting data in a first first time unit from data in a second first time unit in the third portion, and a difference obtained by subtracting data in a third first time unit from data in a fourth first time unit in the third portion; and alternatively, the first difference group comprises: a difference obtained by subtracting data in a second first time unit from data in a first first time unit in the third portion, and a difference obtained by subtracting data in a fourth first time unit from data in a third first time unit in the third portion; and

the second difference group comprises: a difference obtained by subtracting data in a first second time unit from data in a second second time unit in the fourth portion, and a difference obtained by subtracting data in a third second time unit from data in a fourth second time unit in the fourth portion; and alternatively, the second difference group comprises: a difference obtained by subtracting data in a second second time unit from data in a first second time unit in the fourth portion, and a difference obtained by subtracting data in a fourth first time unit from data in a third first time unit in the fourth portion.

15. The method according to claim 12 or 13, wherein in a case that M is equal to 3,

the first difference group comprises: a difference obtained by subtracting data in a first first time unit from data in a second first time unit in the third portion, and a difference obtained by subtracting the data in the second first time unit from data in a third first time unit in the third portion; and alternatively, the first difference group comprises: a difference obtained by subtracting data in a second first time unit from data in a first first time unit in the third portion, and a difference obtained by subtracting data in a third first time unit from the data in the second first time unit in the third portion; and

the second difference group comprises: a difference obtained by subtracting data in a first second time unit from data in a second second time unit in the fourth portion, and a difference obtained by subtracting the data in the second second time unit from data in a third second time unit in the fourth portion; and alternatively, the second difference group comprises: a difference obtained by subtracting data in a second second time unit from data in a first second time unit in the fourth portion, and a difference obtained by subtracting data in a third second time unit from the data in the second second time unit in the fourth portion.

16. The method according to claim 12, wherein in a case that the second device transmits P third signals, P is an integer greater than or equal to 2; and after the obtaining a first difference group through subtraction on the data in every two adjacent first time units in the third portion and obtaining a second difference group through subtraction on the data in every two adjacent second time units in the fourth portion, the method further comprises:

obtaining, by the third device, a first average difference group by performing corresponding averaging on differences comprised in P first difference groups corresponding to the P third signals, and obtaining, by the third device, a second average difference group by performing corresponding averaging on differences comprised in P second difference groups corresponding to the P third signals; and

the determining, by the third device, a first correlation value of a difference of the data in every two adjacent first time units in the third portion according to the first difference group, and determining, by the third device, a second correlation value of a difference of the data in every two adjacent second time units in the fourth portion according to the second difference group comprises:

determining, by the third device, the first correlation value according to the first average difference group, and determining, by the third device, the second correlation value according to the second average difference group.

17. The method according to claim 12, wherein the determining, by the third device, a first correlation value of the third portion according to the first difference group, and determining, by the third device, a second correlation value of the fourth portion according to the second difference group comprise:

obtaining, by the third device, the first correlation value through a correlation calculation on the difference of the data in every two adjacent first time units in the first difference group, and obtaining, by the third device, the second correlation value through a correlation calculation on the difference of the data in every two adjacent second time units in the second difference group.

18. The method according to any one of claims 12 to 17, wherein the obtaining the bit information of the second signal through demodulation according to the first correlation value and the second correlation value comprises:

determining, in a case that the first correlation value is greater than or equal to the second correlation value, that the bit information of the second signal is a first value, and alternatively determining, in a case that the first correlation value is smaller than the second correlation value, that the bit information of the second signal is a second value according to a preset modulation rule by the third device.

19. The method according to claim 18, wherein the first value is equal to 1 and the second value is equal to 0; and alternatively, the first value is equal to 0 and the second value is equal to 1.

20. An apparatus for transmitting information, comprising:

a first transmission module, configured to transmit a first signal, wherein the first signal comprises a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2.

21. An apparatus for transmitting information, comprising:

a first reception module, configured to receive a first signal that is transmitted by a first device, wherein the first signal comprises a first portion and a second portion; the first portion occupies M first time units, and data in the M first time units are identical; the second portion occupies M second time units, and data in the M second time units are identical; and the data in the first time units are identical or contrary to the data in the second time units, and M is an integer greater than 2;

a modulation module, configured to perform backscatter modulation on the first signal by using a second signal, and generate a third signal, wherein the second signal comprises a first sub-signal and a second sub-signal, and the third signal comprises a third portion and a fourth portion; the first sub-signal is configured to modulate the first portion to obtain the third portion, and the second sub-signal is configured to modulate the second portion to obtain the third portion; bit information of the second signal carried in the third signal is **characterized by** a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion; and

a second transmission module, configured to transmit the third signal.

22. An apparatus for receiving information, comprising:

a second reception module, configured to receive a third signal that is transmitted by a second device, wherein the third signal comprises a third portion and a fourth portion, the third portion occupies M first time units, the fourth portion occupies M second time units, and M is an integer greater than 2; bit information of a second signal carried in the third signal is **characterized by** a first change condition of the third portion and a second change condition of the fourth portion, and the first change condition is different from the second change condition; and the first change condition indicates an identical or contrary condition between polarity changes of data in every two adjacent first time units in the third portion, and the second change condition indicates an identical or contrary condition between polarity changes of data in every two adjacent second time units in the fourth portion;

a processing module, configured to obtain a first difference group through subtraction on the data in every two adjacent first time units in the third portion and obtain a second difference group through subtraction on the data in every two adjacent second time units in the fourth portion;

a determination module, configured to determine a first correlation value of a difference of the data in every two adjacent first time units in the third portion according to the first difference group and determine a second correlation value of a difference of the data in every two adjacent second time units in the fourth portion according to the second difference group; and

a demodulation module, configured to obtain the bit information of the second signal through demodulation according to the first correlation value and the second correlation value.

23. A communication device, comprising: a processor and a memory, wherein the memory stores a program or an instruction that is runnable on the processor, and the program or the instruction implements steps of the method for transmitting information according to any one of claims 1 to 5, or steps of the method for transmitting information according to any one of claims 6 to 11, or steps of the method for receiving information according to any one of claims 12 to 19 when executed by the processor.

24. A readable storage medium, storing a program or an instruction, wherein the program or the instruction implements steps of the method for transmitting information according to any one of claims 1 to 5, or steps of the method for transmitting information according to any one of claims 6 to 11, or steps of the method for receiving information according to any one of claims 12 to 19 when executed by a processor.

Radio frequency
(RF)source&
BSC reception device

BSC transmission
device

FIG. 1A

Radio frequency
(RF) source

Backscatter
communication (BSC)
reception device

BSC transmission
device

FIG. 1B

Transmit a first signal by a first device

21

FIG. 2

First portion                    Second portion

s(t)  | Slot 1 | Slot 2 | Slot 3 | Slot 4 | Slot 1 | Slot 2 | Slot 3 | Slot 4

$N$

FIG. 3

First signal 1         First signal 2                First signal P

| Reference signal | Information signal | Reference signal | Information signal | · · · | Reference signal | Information signal |

## FIG. 4A

First signal 1         First signal 2                First signal P

| Reference signal | Information signal | Data | Reference signal | Information signal | Data | · · · | Reference signal | Information signal | Data |

## FIG. 4B

Receive a first signal that is transmitted by a first device by a second device    51

Perform backscatter modulation on the first signal by the second device by using a second signal, and generate a third signal    52

Transmit the third signal by the second device    53

## FIG. 5

FIG. 6A

FIG. 6B

FIG. 6C

FIG. 6D

First portion        Second portion

Slot 1   Slot 2   Slot 3   Slot 1   Slot 2   Slot 3

First sub-signal       Second sub-signal

B=1

B=0

## FIG. 7A

First portion        Second portion

Slot 1   Slot 2   Slot 3   Slot 1   Slot 2   Slot 3

First sub-signal       Second sub-signal

B=1

B=0

## FIG. 7B

FIG. 7C

FIG. 7D

FIG. 7E

FIG. 7F

First portion    Second portion

| Slot 1 | Slot 2 | Slot 3 | Slot 1 | Slot 2 | Slot 3 |

First sub-signal    Second sub-signal

B=1

B=0

## FIG. 7G

First portion    Second portion

| Slot 1 | Slot 2 | Slot 3 | Slot 1 | Slot 2 | Slot 3 |

First sub-signal    Second sub-signal

B=1

B=0

## FIG. 7H

Receive a third signal that is transmitted by a second device by a third device 　81

Obtain a first difference group through subtraction on data in every two adjacent first time units in a third portion and obtain a second difference group through subtraction on data in every two adjacent second time units in a fourth portion by the third device 　82

Determine a first correlation value of a difference of the data in every two adjacent first time units in the third portion according to the first difference group and determine a second correlation value of a difference of the data in every two adjacent second time units in the fourth portion according to the second difference group by the third device 　83

Obtain bit information of a second signal through demodulation according to the first correlation value and the second correlation value by the third device 　84

FIG. 8

90
Apparatus for transmitting information
91
First transmission module

FIG. 9

100
Apparatus for transmitting information
101
First reception module
102
Modulation module
103
Second transmission module

FIG. 10

FIG. 11

FIG. 12

<div align="center">

**INTERNATIONAL SEARCH REPORT**

</div>

| | International application No. |
|---|---|
| | **PCT/CN2023/101017** |

**A. CLASSIFICATION OF SUBJECT MATTER**

H04L 25/03(2006.01)i

According to International Patent Classification (IPC) or to both national classification and IPC

**B. FIELDS SEARCHED**

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP, IEEE: 时间单元, 时隙, 符号, 子帧, 帧, 数据, 相同, 相反, 重复, 反向散射调制, 极性, 变化, time unit, slot, symbol, subframe, frame, data, same, opposite, repetition, backscatter modulation, polarity, variation

**C. DOCUMENTS CONSIDERED TO BE RELEVANT**

| Category* | Citation of document, with indication, where appropriate, of the relevant passages | Relevant to claim No. |
|---|---|---|
| X | CN 113556817 A (HUAWEI TECHNOLOGIES CO., LTD.) 26 October 2021 (2021-10-26) description, paragraphs [0089]-[0273] | 1-5, 20, 23, 24 |
| A | CN 111886806 A (HUAWEI TECHNOLOGIES CO., LTD.) 03 November 2020 (2020-11-03) entire document | 1-24 |
| A | CN 112073082 A (CHENGDU HUAWEI TECHNOLOGIES CO., LTD.) 11 December 2020 (2020-12-11) entire document | 1-24 |
| A | CN 112311422 A (HUAWEI TECHNOLOGIES CO., LTD.) 02 February 2021 (2021-02-02) entire document | 1-24 |
| A | US 2016094933 A1 (GOOGLE INC.) 31 March 2016 (2016-03-31) entire document | 1-24 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2023** | **13 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2023/101017** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 113556817 | A | 26 October 2021 | WO | 2021218378 | A1 | 04 November 2021 |
| | | | | EP | 4138486 | A1 | 22 February 2023 |
| CN | 111886806 | A | 03 November 2020 | WO | 2019178824 | A1 | 26 September 2019 |
| CN | 112073082 | A | 11 December 2020 | WO | 2020233231 | A1 | 26 November 2020 |
| | | | | EP | 3952119 | A1 | 09 February 2022 |
| | | | | US | 2022077886 | A1 | 10 March 2022 |
| CN | 112311422 | A | 02 February 2021 | WO | 2021017702 | A1 | 04 February 2021 |
| US | 2016094933 | A1 | 31 March 2016 | WO | 2016053504 | A1 | 07 April 2016 |
| | | | | EP | 3201839 | A1 | 09 August 2017 |
| | | | | KR | 20170010017 | A | 25 January 2017 |
| | | | | CN | 106664510 | A | 10 May 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210730477X